(19) **Europäisches Patentamt**
**European Patent Office**
**Office européen des brevets**

(11) **EP 3 150 323 B1**

(12) **EUROPEAN PATENT SPECIFICATION**

(45) Date of publication and mention
of the grant of the patent:
**18.11.2020 Bulletin 2020/47**

(51) Int Cl.:
*B23K 26/12* (2014.01)         *B23K 26/356* (2014.01)
*B23K 26/04* (2014.01)         *B23K 26/146* (2014.01)

(21) Application number: **16189760.8**

(22) Date of filing: **20.09.2016**

(54) **LASER PROCESSING APPARATUS, LASER PROCESSING METHOD AND DISTANCE MEASUREMENT METHOD**

LASERBEARBEITUNGSVORRICHTUNG, LASERBEARBEITUNGSVERFAHREN UND ENTFERNUNGSMESSVERFAHREN

APPAREIL DE TRAITEMENT LASER, PROCÉDÉ DE TRAITEMENT LASER ET PROCÉDÉ DE MESURE DE DISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2015 JP 2015194156
25.12.2015 JP 2015254209
29.08.2016 JP 2016166502**

(43) Date of publication of application:
**05.04.2017 Bulletin 2017/14**

(73) Proprietor: **Kabushiki Kaisha Toshiba
Minato-ku
Tokyo (JP)**

(72) Inventors:
• **Ito, Akira**
  **Tokyo, Tokyo (JP)**
• **Yamamoto, Setsu**
  **Tokyo, Tokyo (JP)**
• **Nomura, Kota**
  **Tokyo, Tokyo (JP)**

• **Semboshi, Jun**
  **Tokyo, Tokyo (JP)**
• **Chida, Itaru**
  **Tokyo, Tokyo (JP)**
• **Shiihara, Katsunori**
  **Tokyo, Tokyo (JP)**
• **Ichikawa, Hiroya**
  **Tokyo, Tokyo (JP)**
• **Hirota, Keiichi**
  **Tokyo, Tokyo 160-0023 (JP)**
• **Yoshida, Masahiro**
  **Tokyo, Tokyo 160-0023 (JP)**

(74) Representative: **Moreland, David
Marks & Clerk LLP
Aurora
120 Bothwell Street
Glasgow G2 7JS (GB)**

(56) References cited:
**EP-A1- 1 795 620        FR-A1- 2 900 852
JP-A- 2001 004 354      US-B1- 6 881 925**

**Description**

**FIELD**

The present embodiments relate to a laser processing apparatus, a laser processing method, and a distance measurement method.

**BACKGROUND**

In a plant such as a nuclear power plant where high safety is required, equipment such as incore equipment which is difficult for human operators to access is accessed using automatic equipment for various maintenance works such as inspection, surface modification, and repair during periodical inspection. The maintenance works include a countermeasure against SCC (Stress Corrosion Cracking) caused by a tensile stress remaining in a welding part, and there is developed a laser peening method and apparatus capable of preventing occurrence of the SCC.

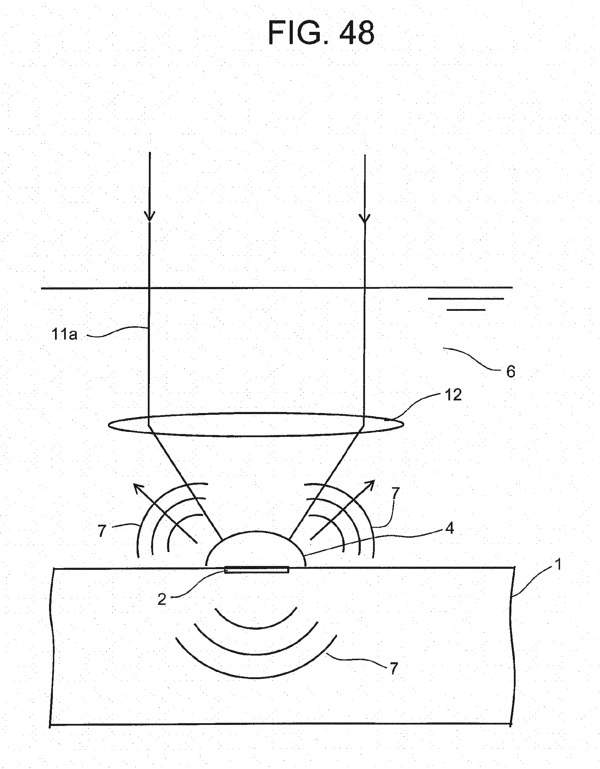

FIG. 48 is a conceptual view illustrating a principle of laser peening. A laser light 11a having a pulse width of about several ns is collected on a spot having a diameter of about 1 mm by a light collector 12 to be irradiated onto a workpiece 1. Then, a surface of the workpiece 1 absorbs energy and is turned into a plasma. When a circumference of a plasma 4 is covered with a liquid 6 transparent with respect to a wavelength of the laser light, expansion of the plasma 4 is prevented. Then, an inner pressure of the plasma 4 reaches about several GPa to apply shock to the workpiece 1. In this event, a strong shock wave 7 occurs in the workpiece 1 and the liquid 6. The shock wave propagates in the workpiece to cause plastic deformation and to change a residual stress at a processing point 2 into a compressive residual stress.

The laser peening less depends on a material strength in a hardening process than another peening technique such as a shot peening, a water-jet peening, or an ultrasonic shot peening and is capable of processing the workpiece 1 up to its inner part with a depth of about 1 mm from a surface of the workpiece 1 in a plate thickness direction. Further, the laser peening provides excellent processability at a narrow portion because there is no reaction force during the processing and its processing apparatus can be easily downsized. For example, a laser processing apparatus and method that can be applied to a workpiece having a small tube inner diameter are disclosed.

Accessing such narrow spaces as those in the reactor vessel inner structure of the light water reactor causes difficulty holding razor strength and keeping irradiating location. US6881925B1 discloses a technique that enables adjustment of distance and beam angle of the razor irradiation head in such cases. FR2900852A1 discloses a technique that irradiates razor beam while jetting water to such objects that cannot be immersed in the water. JP2001004354 discloses a system where an object is irradiated by a laser beam; this causes ultrasonic waves to be generated that are then detected by ultrasonic receiving means arranged on the same axis as the irradiating means, and from this, the shape of the object is determined. EP1795620A01, which discloses the preamble of claims 1 and 6, discloses a system that includes a sensor connected to a controller including an input connected to a processor. The processor is configured to determine a time-of-flight of residual energy associated with the laser shock event from the workpiece to the sensor and determine peen quality from the time-of-flight of the residual energy.

Generally, in the laser peening, the workpiece 1 needs to be installed in the liquid 6 or applied with coating in order to obtain a high plasma stress confinement effect. This restricts a laser peening execution environment and complicates processing procedures. However, a technique that allows the laser peening to be carried out in an air environment is now developed. In this technique, water is jetted to the workpiece 1 with transmission of a laser, whereby local watertight condition along a light path and a processing point is achieved. This may significantly enlarge an application range of the laser peening.

In accordance with an aspect of the invention, there is provided a laser processing apparatus according to Claim 1 and a distance measurement method according to Claim 6. In the following description, features described as examples that do not fall within the scope of the appended claims do not form part of the invention.

**BRIEF DESCRIPTION OF THE DRAWINGS**

FIG. 1 is a block diagram illustrating a configuration of a laser processing apparatus according to a first example.
FIG. 2 is a conceptual sectional elevational view illustrating a configuration of around the water nozzle not being part of the present invention.
FIG. 3 is a conceptual sectional elevational view illustrating a configuration including the collection distance adjuster not being part of the present invention.
FIG. 4 is a conceptual sectional elevational view illustrating a configuration including the movable driver not being part of the present invention.

FIG. 5 is a conceptual sectional elevational view illustrating a configuration of a modification of the movable driver not being part of the present invention.

FIG. 6 is a waveform diagram illustrating a received waveform image of the sound sensor.

FIGS. 7A and 7B are each a conceptual graph for explaining a setting of a reference point of time width calculation, in which FIG. 7A is undesirable example, and FIG. 7B is a desirable example.

FIG. 8 is a conceptual graph for explaining calculation of the shock wave propagation time.

FIG. 9 is a conceptual view for explaining calculation of the shock wave propagation time.

FIG. 10 is a block diagram illustrating a procedure of a laser processing method according to the first examples.

FIGS. 11A and 11B are waveform diagrams each illustrating a received waveform image of the sound sensor when the distance from the processing point of the workpiece, in which FIG. 11A illustrates a signal before the change, and FIG. 11B illustrates a signal after the change.

FIG. 12 is a conceptual sectional elevational view illustrating a configuration of a laser processing apparatus according to a second example.

FIG. 13 is a conceptual sectional elevational view illustrating a configuration of a laser processing apparatus according to a third example.

FIG. 14 is a conceptual sectional elevational view for explaining measurement of the processing distance.

FIG. 15 is a conceptual sectional elevational view illustrating a configuration of a laser processing apparatus according to a fourth example.

FIG. 16 is a conceptual sectional elevational view illustrating a configuration of a modification of the laser processing apparatus according to the fourth example.

FIGS. 17A and 17B are conceptual views each illustrating a configuration not being part of the present invention in a case where the sound sensor 10 includes a sound detector 10b that has been subjected to surface treatment that makes wettability of a surface of the sound detector 10b lower, in which FIG. 17A is a plan view, and FIG. 17B is a front view.

FIGS. 18A and 18B are conceptual views each illustrating a configuration not being part of the present invention in a case where the sound sensor 10 includes a sound detector 10c that has been subjected to surface treatment that makes wettability of an outer surface of the sound detector 10c higher, in which FIG. 18A is a plan view, and FIG. 18B is a front view.

FIGS. 19A and 19B are conceptual view each illustrating a configuration not being part of the present invention in a case where the sound sensor 10 includes a sound detector 10d on an outer surface on which a convex geometric shape is formed, in which FIG. 19A is a plan view, and FIG. 19B is a front view.

FIGS. 20A and 20B are conceptual view each illustrating a configuration not being part of the present invention in a case where the sound sensor 10 includes a sound detector 10e on an outer surface on which a geometric shape including convex portions is formed, in which FIG. 20A is a plan view, and FIG. 20B is a front view.

FIGS. 21A and 21B are conceptual view each illustrating a configuration not being part of the present invention in a case where the sound sensor 10 includes a sound detector 10f on an outer surface on which a concave geometric shape is formed, in which FIG. 21A is a plan view, and FIG. 21B is a front view.

FIGS. 22A and 22B are conceptual view each illustrating a configuration not being part of the present invention in a case where the sound sensor 10 includes a sound detector 10g on an outer surface on which a geometric shape including concave portions is formed, in which FIG. 22A is a plan view, and FIG. 22B is a front view.

FIG. 23 is a conceptual sectional elevational view illustrating a configuration not being part of the present invention of a laser processing apparatus according to a sixth example.

FIG. 24 is a vertical cross-sectional view illustrating a configuration not being part of the present invention of the sound sensor.

FIG. 25 is a graph for explaining an effect of the laser processing apparatus according to the present example.

FIG. 26 is a conceptual sectional elevational view illustrating a configuration of a laser processing apparatus according to the present invention.

FIG. 27 is a sectional elevational view for explaining a first modification of the installation structure of the sound sensor.

FIG. 28 is a sectional elevational view for explaining a second modification of the installation structure of the sound sensor.

FIG. 29 is a vertical cross-sectional view for explaining a first sound transmission path.

FIG. 30 is a vertical cross-sectional view for explaining a second sound transmission path.

FIG. 31 is a waveform diagram illustrating a received waveform image of the sound sensor of the laser processing apparatus according to the present invention.

FIG. 32 is a vertical cross-sectional view illustrating an installation structure taken along and viewed from a line XXXII-XXXII of FIG. 33 in a case where a sound shoe 101a is formed into a columnar shape having a horizontally extending axis.

FIG. 33 is a cross-sectional plan view. The sound shoe 101a has a shape obtained by removing a portion corresponding to a cross-part of a flow path of the water nozzle 5.

FIG. 34 is a vertical cross-sectional view illustrating an installation structure taken along and viewed from a line XXXIV-XXXIV of FIG. 35 in a case where a sound shoe is formed into a flat-plate shape.

FIG. 35 is a cross-sectional plan view in a case where a sound shoe is formed into a flat-plate shape.

FIG. 36 is a vertical cross-sectional view illustrating an installation structure taken along and viewed from a line XXXVI-XXXVI of FIG. 37 in a case where a sound shoe 101c is formed into a tapered shape.

FIG. 37 is a cross-sectional plan view in a case where a sound shoe 101c is formed into a tapered shape.

FIG. 38 is a vertical cross-sectional view illustrating an installation structure taken along and viewed from a line XXXVIII-XXXVIII of FIG. 39 in a case where a sound shoe 101d is formed into a cone shape.

FIG. 39 is a cross-sectional plan view in a case where a sound shoe 101d is formed into a cone shape.

FIG. 40 is a vertical cross-sectional view illustrating an installation structure taken along and viewed from a line XL-XL of FIG. 41 in a case where a sound shoe 101e is formed into a rotary semielliptical shape.

FIG. 41 is a cross-sectional plan view in a case where a sound shoe 101e is formed into a rotary semielliptical shape.

FIG. 42 is a vertical cross-sectional view illustrating an installation structure taken along and viewed from a line XLII-XLII of FIG. 43 in a case where the sound sensor 10 is disposed in an inclined manner.

FIG. 43 is a cross-sectional plan view in a case where the sound sensor 10 is disposed in an inclined manner.

FIG. 44 is a conceptual vertical cross-sectional view illustrating a configuration of a laser processing apparatus according to an seventh example.

FIG. 45 is a conceptual sectional elevational view illustrating a configuration of a modification of a laser processing apparatus according to an seventh example.

FIG. 46 is a conceptual perspective view illustrating a configuration of a flow straightener in a laser processing apparatus according to the present invention.

FIG. 47 is a conceptual vertical cross-sectional view illustrating a configuration of another modification of the present invention.

FIG. 48 is a conceptual view illustrating a principle of laser peening.

## DETAILED DESCRIPTION

In order to obtain a sufficient stress improvement effect by the laser peening, it is necessary to consider the following point. That is, in order to generate a shock wave 7 having required energy during irradiation of the laser light 11a onto the workpiece 1, it is necessary to control a spot diameter within a predetermined size so as to prevent the spot diameter from becoming too large. This is a matter common to cases where the laser peening is performed in an underwater environment, where the laser peening is performed with coating applied to the workpiece 1, and where the laser peening is performed with a stream of jetting water.

The spot diameter of the laser light 11a varies depending on a distance from the light collector 12 provided in a laser irradiation head to the workpiece 1. Thus, it is necessary to control the distance to a predetermined value. To this end, it is necessary to correctly measure a distance between a position onto which the laser light 11a is irradiated, i.e., a surface of the workpiece 1 and a reference position (a light collector, an optical head end face, or a nozzle leading end).

In this regard, for example, the following measurement technique is proposed. That is, the shock wave generated at a processing point is measured by means of a sound sensor to obtain a trigger from a laser light source as a start point and a time at which the shock wave reaches as an end point. Then, from a time width between the obtained start point and the end point, a distance between the processing point and the sound sensor is calculated.

However, the above technique assumes that at least a space between the processing point and the sound sensor is filled continuously with liquid. In the laser peening using the water stream, the shock wave propagates in the liquid with the processing point existing in the liquid as a sound source, transmitted from the liquid to air through a liquid-air interface, propagates in the air, and reaches the sound sensor.

A sound velocity in the liquid and that in the air differ significantly from each other. In addition, when the water stream is used for the laser peening, a thickness of a liquid film generated at the processing point varies, and the variation becomes a distance measurement error. Further, liquid splash caused by the water stream may be adhered to the sound sensor, which may cause the distance measurement error. In general measurement, an optical means such as a laser distance meter or a stereoscopic camera is used; however, an optical path is blocked or distorted by the water splash, making it substantially impossible to carry out the measurement. As described above, in the laser peening using the water stream, the distance between the processing point and the sound sensor cannot be measured by a simple shock wave time measurement or optical means.

The object of embodiments of the present invention is therefore to allow stable measurement of the distance between the processing point and reference position even in the laser peening using, e.g., the water stream.

Hereinafter, with reference to the accompanying drawings, embodiments of a laser processing apparatus, a laser processing method and a distance measurement method of the present invention will be described. The same or similar portions are represented by the same reference symbols, and a duplicate description will be omitted.

**[FIRST EXAMPLE]**

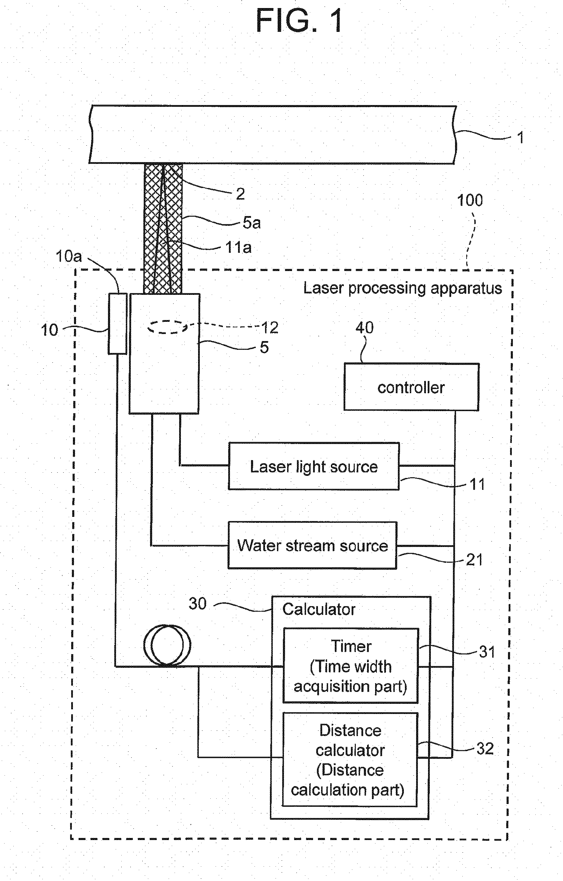

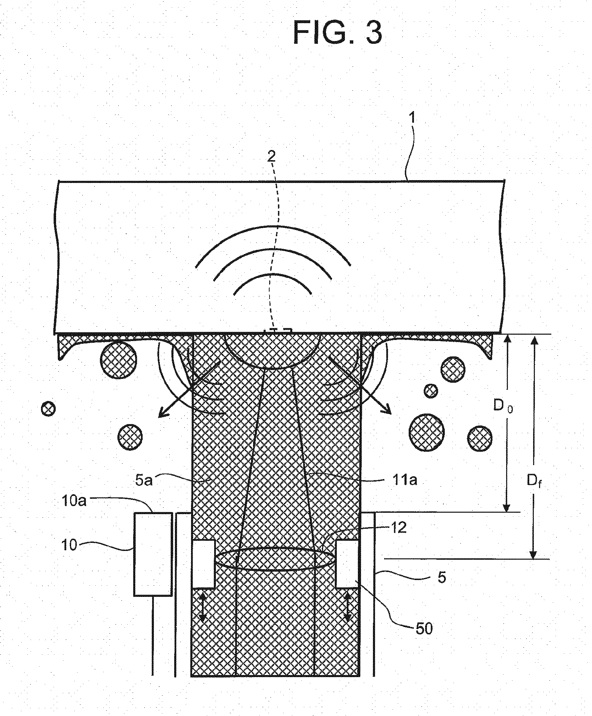

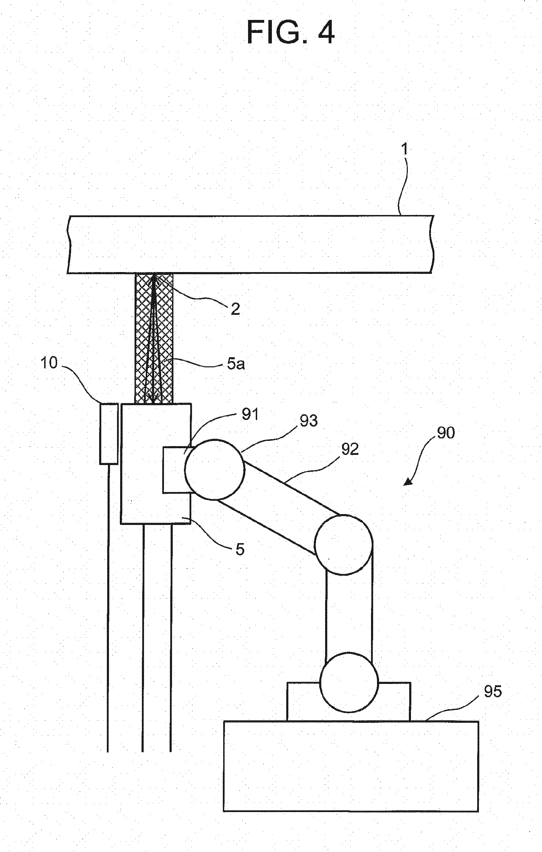

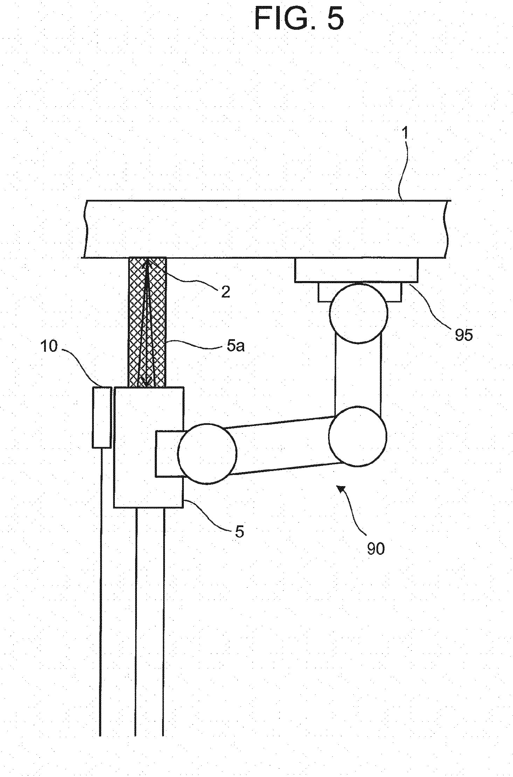

FIG. 1 is a block diagram illustrating a configuration of a laser processing apparatus according to a first example. A laser processing apparatus (a laser light irradiation apparatus) 100 irradiates a laser beam onto a workpiece 1 in a gas atmosphere such as air atmosphere to apply surface hardening treatment. For the laser irradiation, one of processing target positions defined in the workpiece 1 to be worked is selected as an irradiation target. The laser processing apparatus (the laser light irradiation apparatus) 100 includes a laser light source 11, a water stream source 21, a water nozzle 5 (a water stream transmitter), a calculator 30, a controller 40, a sound sensor 10, a collection distance adjuster 50 (FIG. 3), and a movable driver 90 (FIGS. 4 and 5). The water nozzle 5 is attached with a light collector 12 for converging a laser light 11a to be irradiated onto the workpiece 1.

The laser light source 11 emits a laser light. The laser light may be, e.g., an Nd:YAG laser, a $CO_2$ laser, an Er:YAG laser, a titanium sapphire laser, an alexandrite laser, a ruby laser, a fiber laser, a dye laser, and an excimer, but may be any laser light other than the above as long as it can impart required energy to the workpiece. The laser light source 11 may be a continuous wave type or a pulse wave type. Further, a laser light may be irradiated onto the same part of the workpiece 1 from two or more laser light sources 11.

The light collector 12 collects the laser light onto the processing point 2 on a surface to be processed of the workpiece 1. The light collector 12 may be a single convex lens, a combination of two or more convex lenses, or a combination of a convex lens and other lens. The convex lens may be a flat-convex lens, a convex-convex lens, or an aspheric lens. The lens that can be combined with the convex lens may be a flat-concave lens, a concave-concave lens, or a cylindrical lens. Alternatively, the light collector 12 may be a concave mirror.

The laser light may be transmitted to the light collector 12 by means of space transmission using a mirror or a lens, by means of fiber transmission using a fiber or a combination thereof. For profile uniformization of the laser light, a homogenizer or an aperture may be used. Further, for intensity adjustment, devices such as a $\lambda/2$ wavelength plate, a polarizer, a beam splitter, or a half mirror may be used. The optical system elements mentioned above may each be applied with coating that changes a reflectance or a transmittance in accordance with a laser wavelength.

The water stream source 21 supplies water for forming a water stream to generate a partial liquid environment around the surface of the workpiece 1 during irradiation of the laser light 11a onto the workpiece 1. The water stream source 21 may be of a type that supplies the water stream from a water pressure source through an on/off valve. Alternatively, the water stream source 21 may be of a type that moves a piston to supply the water stream from a supply source.

The water nozzle 5 has a tubular shape, and an upper stream side thereof is connected to the water stream source 21 and an exit side thereof is open. The water nozzle 5 leads a water stream to the workpiece 1 without bubble entrainment and jets liquid toward the workpiece 1. The light collector 12 is attached to the water nozzle 5 at a position spaced apart from the exit of the water nozzle 5 by a predetermined distance or longer in the upstream direction so as not to be influenced by the water stream at the exit.

As the liquid to be used, one that does not catch fire in the air and does not prevent propagation of the laser light, for example, aqueous solution such as pure water, city water, or boric acid solution may be used. There are limited number of liquids that are transparent through all of wavelengths, so that it is necessary to consider compatibility between the liquid and the laser light, i.e., transmittance therebetween in selecting the above water solutions. A combination that can obtain a sufficient intensity after the laser light propagates a predetermined distance can be used even though an attenuation rate is high to some degree. By making the circumference of the water stream into an inert gas atmosphere, liquid that can catch fire in the air, for example, alcohols or oils can be used.

Here, as a representative example, the air as the atmosphere and the city water as the liquid are assumed. Although the laser light and the water stream are coaxial in this example, they may have different axes as long as a water film can be partially obtained at the processing point 2 of the workpiece 1. The processing point 2 is defined as a part of the surface of the workpiece 1 to be processed by each irradiation of the laser light.

The sound sensor 10 is fixed to, e.g., the water nozzle 5 in order to get a certain positional relationship with the water nozzle 5 and is configured to be able to detect the shock wave generated at the processing point 2 of the workpiece 1 as a sound wave (sound). The sound sensor 10 is fixed to the water nozzle 5 such that a part that receives and detects the sound wave, i.e., a sound detector 10a of the sound sensor 10 faces the workpiece 1 side. An output of the sound sensor 10 is input to the calculator 30.

The sound sensor 10 is a probe for aerial ultrasonic wave measurement that uses a general piezoelectric element. Any sensors that can receive a frequency band of the shock wave to be measured, such as a water-proof speaker or a vibration meter that irradiates a laser onto surface of a diaphragm, may be used as the sound sensor 10.

When the position relative to the water nozzle 5 can be set to a predetermined position, the sound sensor 10 can be fixed to a member other than the water nozzle 5.

The calculator 30 includes a timer 31 (a time width acquisition part) and a distance calculator 32 (a distance calculation part).

The timer 31 detects and acquires a time width Tw from a certain reference time Ti to a time Te at which the shock wave generated at the processing point 2 of the workpiece reaches the sound sensor 10. The timer 31 has a means for converting an analog signal detected from the sound sensor 10 into a digital signal. The timer 31 may be a measurement instrument called oscilloscope, a personal computer incorporating an AD converter, a personal computer connected to a dedicated device similar to the AD converter, or a combination of thereof. The timer 31 is connected to the laser light source 11 that oscillates the laser light 11a, or the water stream source 21 that generates a water pressure required for formation of the water stream, and exchanges signals therewith.

The distance calculator 32 calculates a distance between the processing point 2 and the sound sensor 10 based on a propagation time measured by the timer 31. Here, a distance between a representative part of the laser processing apparatus (the laser light irradiation apparatus) 100, for example, the distance between a leading end of the water nozzle 5 and target processing point 2 is referred to as a processing distance and is represented as a processing distance $D_0$. Further, a distance between the processing point 2 and a sound detector 10a of the sound sensor 10 is referred to as a propagation distance and represented as a propagation distance $D_p$. Further, a distance between the light collector 12 and the processing point 2 is referred to as a collection distance and represented as a collection distance $D_f$. A distance (processing distance $D_0$) between the laser processing apparatus 100 as a laser light irradiation apparatus and the processing point 2 can be obtained by measuring or calculating the propagation distance $D_p$ or the collection distance $D_f$.

The controller 40 exchanges signals with the laser light source 11, the water stream source 21, the water nozzle 5, the calculator 30, the collection distance adjuster 50, and the movable driver 90 and provides coordination among them. Nevertheless, the laser light source 11, the water stream source 21, the calculator 30, the collection distance adjuster 50, and the movable driver 90 can respectively adjust the set point of the output or ON and OFF by itself.

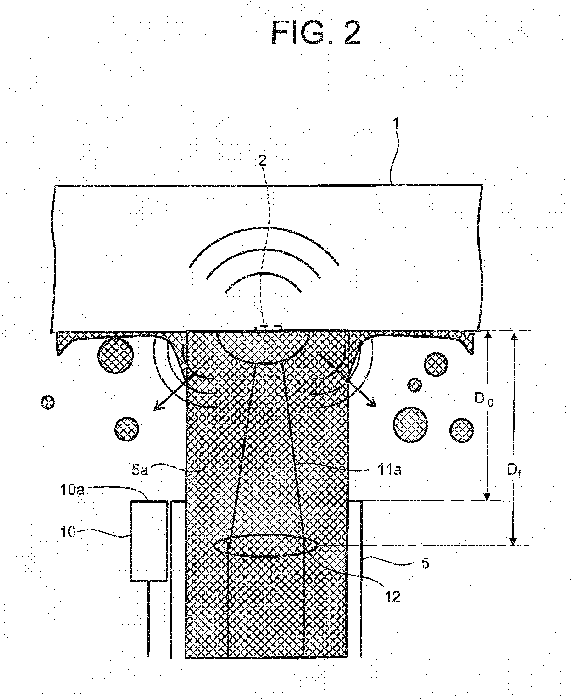

FIG. 2 is a conceptual sectional elevational view illustrating a configuration of around the water nozzle. The workpiece 1 is disposed vertically above the water nozzle 5, and a water stream 5a is jetted upward in the vertical direction. Although the workpiece 1 is disposed vertically above the water nozzle 5, the example is not limited to this. That is, the workpiece 1 may be disposed in the lateral direction of or vertically below the water nozzle 5.

In the water stream 5a directed toward the workpiece 1 from the water nozzle 5, the laser light 11a is directed in the same direction. The laser light 11a is collected toward the workpiece 1 by the light collector 12 provided in the water nozzle 5. In order to make an irradiation density of the laser light 11a at the processing point 2 equal to or larger than a predetermined value, the collection distance $D_f$ between the position of the light collector 12 and the processing point 2 is required to satisfy the following condition: $F - \Delta F < D_f < F + \Delta F$. That is, it is necessary to make the collection distance $D_f$ falls within a predetermined range. In the above conditional expression, F is a focal length, and $\Delta F$ is a predetermined width. For appropriate positioning of the light collector 12, the collection distance $D_f$ can be adjusted by the collection distance adjuster 50 to be described later.

Therefore, the collection distance $D_f$ itself or a distance based on which the collection distance $D_f$ can be calculated needs to be measured. The sound sensor 10 detects the shock wave generated when the laser light 11a reaches the processing point 2.

FIG. 3 is a conceptual sectional elevational view illustrating a configuration including the collection distance adjuster. The collection distance adjuster 50 adjusts a position of the light collector 12 in an optical axis direction. In order to maintain the distance between the light collector 12 and the workpiece 1 in an appropriate range, the optical axis direction position of the light collector 12 can be adjusted by using the collection distance adjuster 50. At this time, the distance to be adjusted may be estimated from a previously measured shape of the workpiece 1 and position of the light collector 12. Alternatively, the distance between the light collector 12 and the workpiece 1 may be adjusted according to need to an optimum distance by feeding back the measured value of the propagation distance $D_p$ or the collection distance $D_f$.

FIG. 4 is a conceptual sectional elevational view illustrating a configuration including the movable driver. The movable driver 90 includes a restraining part 91, an arm 92, a joint 93, and a power part 95. The power part 95 is externally fixed and supported. The joint 93 can be changed in angle by the power unit 95. Accordingly, a direction of the arm 92 is changed to move the light collector 12 and the sound sensor 10 attached to the water nozzle 5 connected to the movable driver 90 by the restraining part 91. As a result, an interval between the workpiece 1 and those of the water nozzle 5, the sound sensor 10 and the light collector 12 is changed.

Further, the movable driver 90 moves the water nozzle 5, the light collector 12 and the sound sensor 10 which are attached to the water nozzle 5 in accordance with the position of the processing point 2 to be sequentially moved on the processing surface of the workpiece 1.

FIG. 5 is a conceptual sectional elevational view illustrating a configuration of a modification of the movable driver. In this modification, the power part 95 of the movable driver 90 is fixed to the workpiece 1. Also in the present modification, the movable driver 90 changes the interval between the water nozzle 5 and the sound sensor 10, and the workpiece 1. And the movable driver 90 changes the position of the water nozzle 5 and the sound sensor 10, corresponding to the movement of the processing point 2. In terms of the motive power, the interval between the water nozzle 5 and the sound sensor 10, and the workpiece 1 may be manually adjusted using the movable driver 90.

The following describes operations of the thus configured laser processing apparatus 100 according to the present example.

The laser light 11a irradiated onto the processing point 2 of the workpiece 1 causes an ablation phenomenon, i.e., a phenomenon in which a constituent substance of the surface of the workpiece 1 is explosively released when plasma is generated. As a result, a shock wave is generated in the processing point 2 as a sound source. The shock wave acts on the processing point 2 to impart a compression stress to the processing point 2.

First, the generated shock wave propagates in the liquid. Then, the shock wave is transmitted to the air from the liquid through a liquid-air interface, propagates in the air, and reaches the sound sensor 10. Then, the shock wave is received by the sound sensor 10.

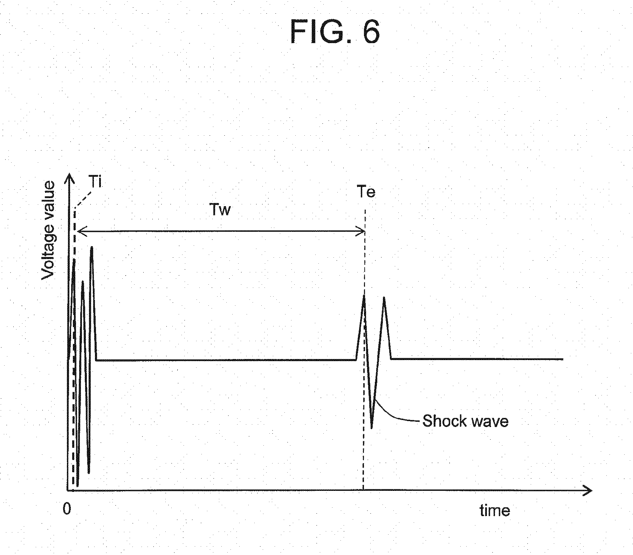

FIG. 6 is a waveform diagram illustrating a received waveform image of the sound sensor. In FIG. 6, a horizontal axis represents time, and a starting point of each oscillation period is set to 0. A vertical axis represents a voltage value captured by the sound sensor. Ti of FIG. 6 is a reference time point of the time width.

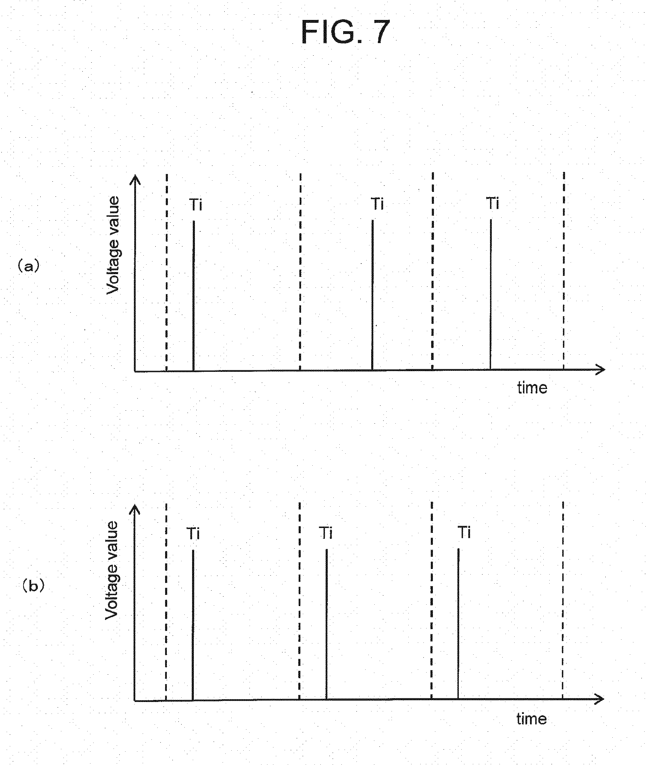

FIGS. 7A and 7B are each a conceptual graph for explaining a setting of a reference point of time width calculation, in which FIG. 7A is undesirable example, and FIG. 7B is a desirable example. In FIGS. 7A and 7B, a horizontal axis represents the entire time flow, and a vertical axis represents a voltage value as in the case of FIG. 6. Further, dashed lines each represent a start time point of transmission. A solid line Ti represents a reference time point. In FIG. 7A, a relationship between the time point represented by the dashed line and Ti represented by the continuous line is not fixed. On the other hand, in FIG. 7B, the relationship between the time point represented by the dashed line and Ti represented by the solid line is fixed. It is desirable that the reference time point Ti is a signal that satisfies such a condition.

For example, in the case of a 10 Hz laser, at least one Ti time point exists in 100 ms which is one period. Assuming that laser oscillation time is 0 ms, it is desirable that Ti is a fixed value equal to or larger than 0 ms and less than 100 ms. As a signal source for obtaining the Ti signal, a setting signal estimated from a Q switch time point from the laser light source 11 or a pulse repetition frequency of the laser light 11a can be used.

Te of FIG. 6 is an arrival time of the shock wave. The arrival time can be determined using a threshold determination that adopts a time at which a signal intensity exceeds a certain threshold, a peak determination that adopts a peak time of a certain waveform, a zero-cross method that adopts a time at which the signal intensity crosses a zero point, or a method that takes correspondence between the shock wave and a reference wave. In the example of FIG. 6, the peak determination is used to obtain the shock wave arrival time.

The time width Tw is a time width obtained by subtracting time Ti from time Te. For example, assuming that Ti is made to coincide with a laser emission time point, obtained Tw almost represents a time length from when the laser light acts on the processing point to when the shock wave reaches the sound sensor 10, i.e., a propagation time of the shock wave. A time point, at which a command signal is transmitted to the laser light source 11, can be used as the laser light emission time point.

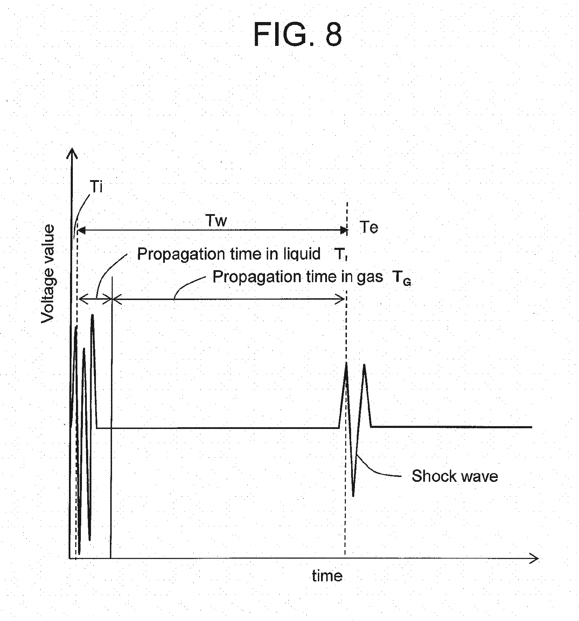

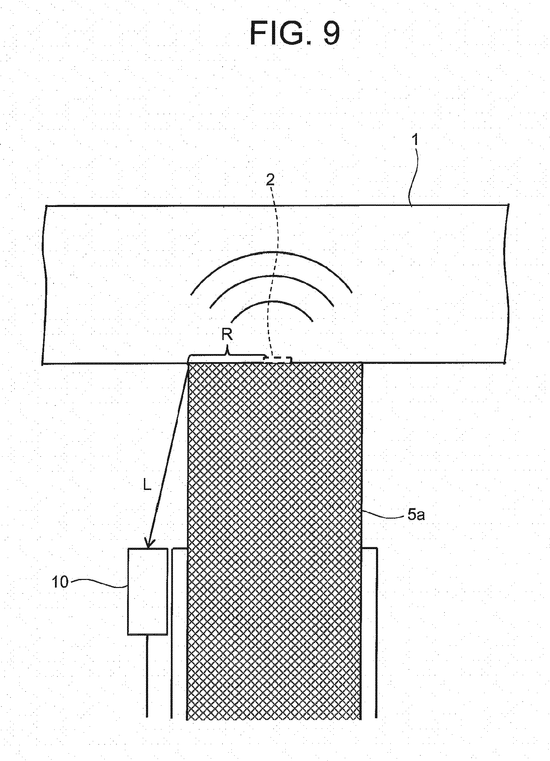

FIG. 8 is a conceptual graph for explaining calculation of the shock wave propagation time. FIG. 9 is a conceptual view for explaining calculation of the shock wave propagation time. The following is the case in which Ti is the laser light emission time point.

As illustrated in FIG. 8, the time width Tw is a sum of a time $T_L$ during which the shock wave propagates in the liquid and a time $T_G$ during which the shock wave goes out of the liquid and propagates in the air. It is empirically considered that a signal that the sound sensor 10 significantly detects as the shock wave is principally a signal emitted from the processing point 2, passing through the liquid via the shortest way, and propagating in the air. That is, in FIG. 9, the shock wave emitted from the processing point 2, i.e., a sound wave caused by the shock propagates by a distance of a diameter R of a water column, then propagates by a distance L in the air, and reaches the sound sensor 10. This appears as the propagation time of FIG. 9.

Thus, the propagation time TL in the liquid is given by the following equation (1):

$$T_L \ = \ R/V_L \qquad\qquad \cdots \ (1)$$

where $V_L$ is a propagation speed of the sound wave in the liquid.

As a result, Tg is calculated by the following equation (2), and a propagation distance $D_p$ is calculated by the following equation (3):

$$T_G = T_W - T_L \qquad \cdots (2)$$

$$D_p = L + R = T_G \cdot V_G + R \qquad \cdots (3)$$

where $V_G$ is a propagation speed of the sound wave in the air.

A relative positional relationship of the sound sensor 10 to the water nozzle 5 and the light collector 12 is known, so that when the propagation distance $D_p$ is known as described above, a collection distance $D_f$ between the processing point 2 and the light collector 12 or processing distance $D_0$ between the processing point 2 and a representative point of the laser processing apparatus 100 can be calculated.

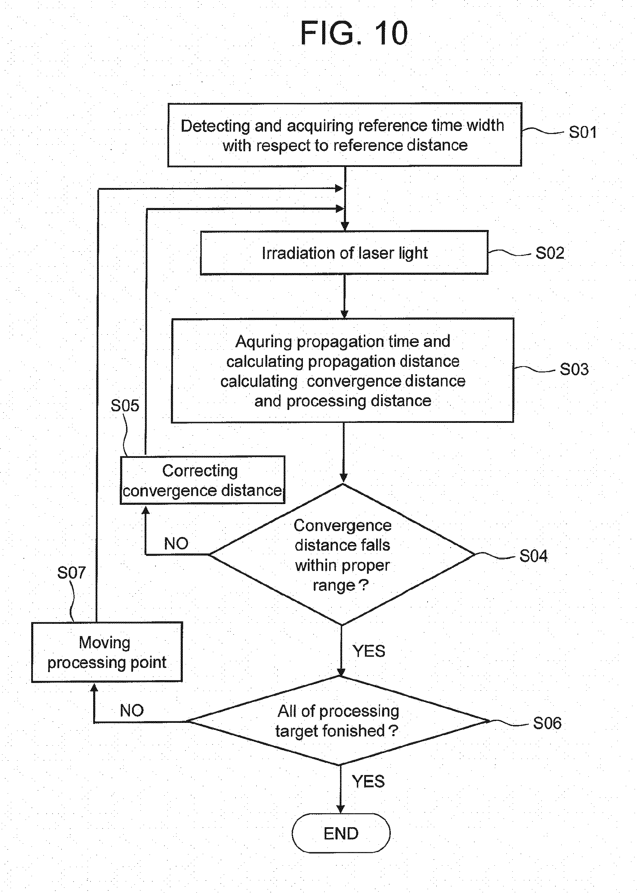

FIG. 10 is a block diagram illustrating a procedure of a laser processing method according to the first example.

When the positional relationship between the processing point 2 and the laser processing apparatus 100 is known, the propagation distance $D_p$ is assumed to be a reference distance. The reference distance may be the collection distance $D_f$ or the processing distance $D_0$ in place of the propagation distance $D_p$. First, a reference time width with respect to the reference distance is detected and acquired (step S01). Then, the laser light 11a is irradiated onto the processing point 2 which is an irradiation target point of the workpiece 1 (step S02). A propagation time of the shock wave generated upon each laser light irradiation is acquired, and the propagation distance $D_p$ is calculated (step S03).

Then, the collection distance $D_f$ and the processing distance $D_0$ of a determination target are calculated from the propagation distance $D_p$.

It is determined whether or not the collection distance $D_f$ falls within a proper range (step S04). When it is determined that the collection distance $D_f$ does not fall within a proper range (NO in step S04), the collection distance adjuster 50 is used to correct the collection distance $D_f$ (step S05), and step S02 and subsequent steps are repeated. When it is determined that the collection distance $D_f$ falls within a proper range (YES in step S04), processing for the processing point 2 as the irradiation target is determined to have been completed. Subsequently, it is determined whether or not all the processing target points set in the workpiece 1 have been subjected to processing (step S06). When it is determined that all of the processing target points set in the workpiece 1 have been subjected to processing (YES in step S06), the laser processing is determined to have ended.

When it is determined that all the processing target points set in the workpiece 1 have not been subjected to processing (NO in step S06), any one of the processing target points in the workpiece 1 that are determined not to have been subjected to processing is set to the irradiation target, that is, the processing point 2 is moved to a point that has not been subjected to processing (step S07). Then, step S02 and subsequent steps are repeated.

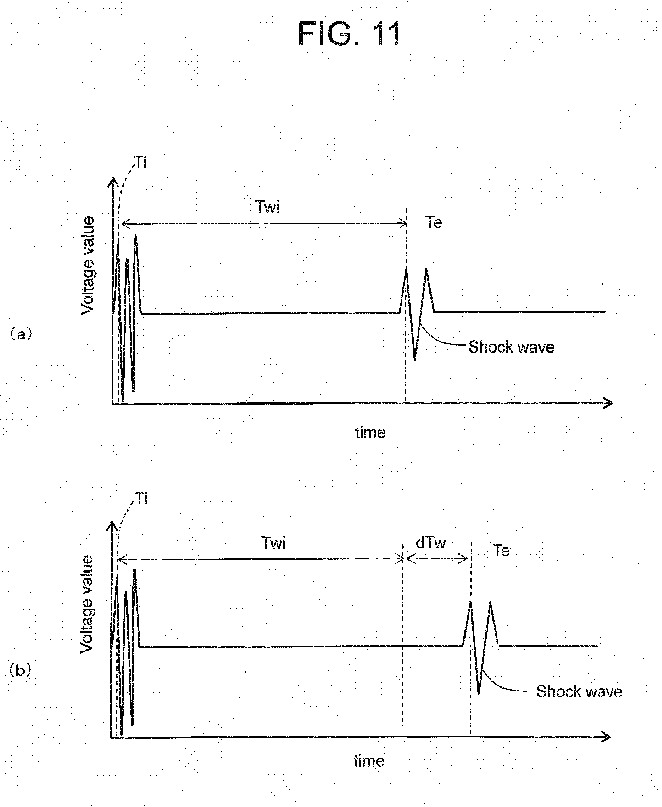

FIGS. 11A and 11B are waveform diagrams each illustrating a received waveform image of the sound sensor when the distance from the processing point of the workpiece has changed, in which FIG. 11A illustrates a signal before the change, and FIG. 11B illustrates a signal after the change. For example, assumed is a case where a distance between the laser processing apparatus 100 and processing point 2 of the workpiece 1, that is, the processing distance $D_0$ is increased in association with movement of the processing.

In this case, it is assumed that the arrival time of the shock wave to the sound sensor 10 is delayed by dTw as compared to a reference time width Twi in the case of FIG. 11A as a reference, that is, the propagation time is increased by dTw. The radius R of the water column is hardly changed even when the processing distance is changed, so that the increase dTw of the propagation time can be regarded substantially as a pure time change caused by a change in the air distance. Thus, a value obtained by multiplying dTw by a propagation speed $V_G$ of the sound wave in the air is an increase dD of the propagation distance, and the propagation distance $D_p$ is calculated by adding the increase dD to a reference distance $D_{p0}$ to get $(D_{p0} + dD)$.

It is desirable that a variation in the radius R of the water column can be controlled to be smaller than the propagation distance $D_p$ and the collection distance $D_f$ to be calculated and a measurement resolution of the processing distance $D_0$. Specifically, the variation is reduced by suppressing pulsation in the water stream source 21 or suppressing occurrence of a swirling flow in a path to the water nozzle 5.

As described above, in the laser peening using the water stream carried out by the laser processing apparatus of the present example, a distance between the processing point and a reference position can be stably measured.

**[SECOND EXAMPLE]**

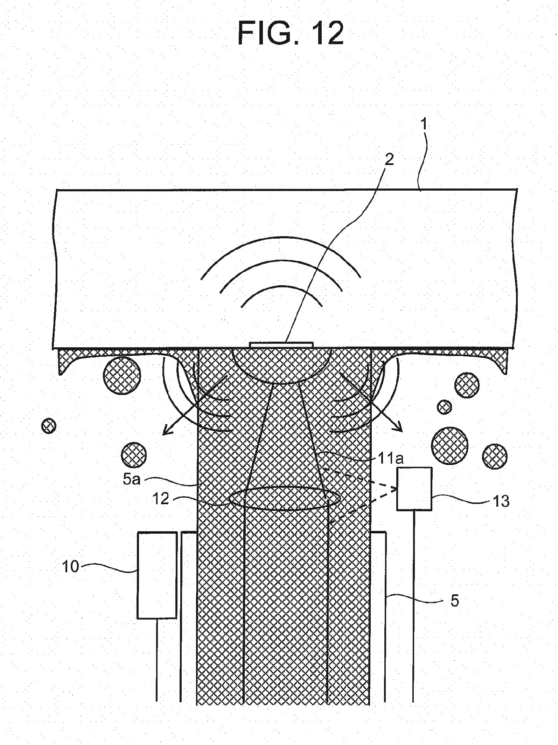

FIG. 12 is a conceptual sectional elevational view illustrating a configuration of a laser processing apparatus according to a second embodiment. The present example is a modification of the first example. The laser processing apparatus 100 according to the present example includes a light detector 13. Even in a laser oscillation of a repeated constant period, a jitter of about several $\mu$s, i.e., fluctuation or disturbance may exist. The light detector 13 is used to detect an actual light emission time point, and a time point of a signal corresponding to the light emission time point is set to Ti, whereby measurement accuracy of the propagation distance $D_p$ and thus the collection distance $D_f$ can be enhanced.

**[THIRD EXAMPLE]**

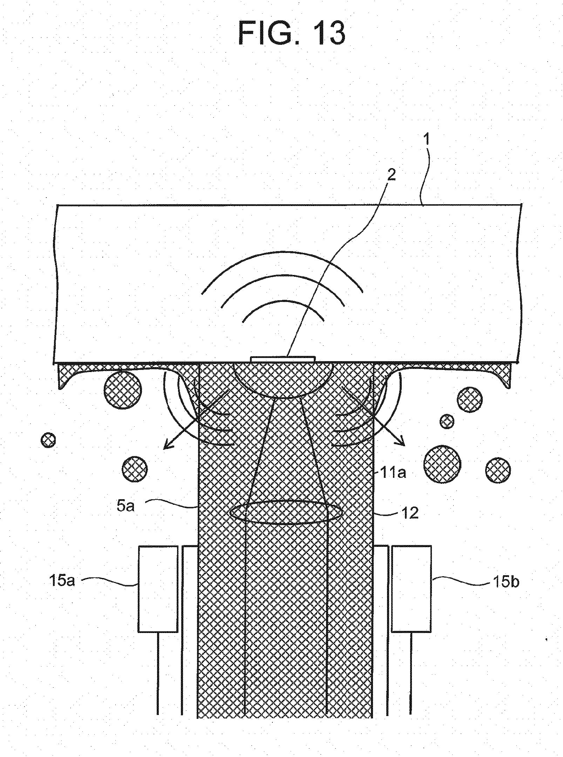

FIG. 13 is a conceptual sectional elevational view illustrating a configuration of a laser processing apparatus according to a third example. The present example is a modification of the first example. The laser processing apparatus 100 according to the present example includes two sound sensors 15a and 15b. The number of the sound sensors may be three or more.

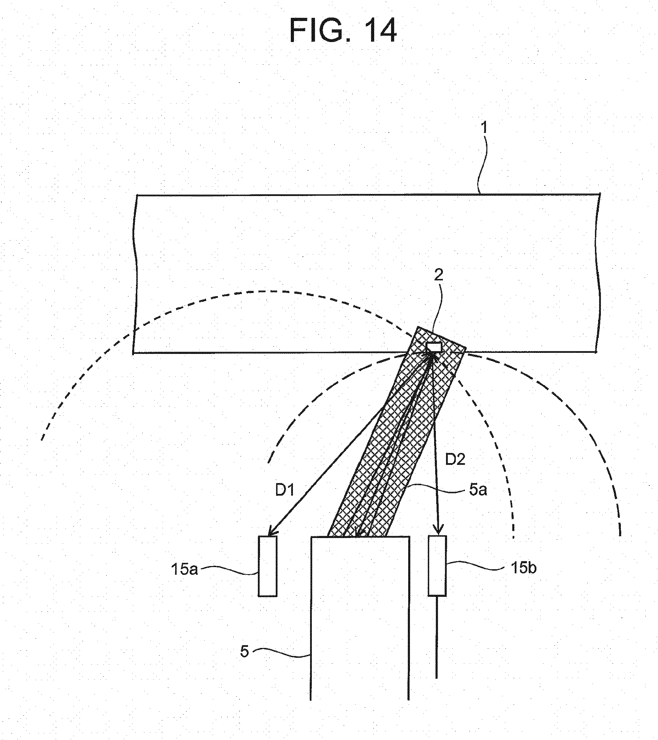

FIG. 14 is a conceptual sectional elevational view for explaining measurement of the processing distance. The shock wave is emitted from the processing point 2 and reaches the two sound sensors 15a and 15b. A distance between the processing point 2 and a reception part of the sound sensor 15a calculated from the propagation time to the sound sensor 15a is denoted as D1. From this, it is estimated that the processing point 2 exists on a sphere having a radius D1 from the reception part of the sound sensor 15a. Similarly, a distance between the processing point 2 and a reception part of the sound sensor 15b calculated from the propagation time to the sound sensor 15b is denoted as D2. From this, it is estimated that the processing point 2 exists on a sphere having a radius D2 from the reception part of the sound sensor 15b.

As a result, it is estimated that the processing point 2 exists on an intersecting line of the sphere having the radius D1 from the reception part of the sound sensor 15a and the sphere having the radius D2 from the reception part of the sound sensor 15b. The points on the intersecting line innumerably exist; however, a point at which the intersecting line contacts the surface of the workpiece 1 can be estimated as the processing point 2. When the intersecting line does not contact but is separated from the surface of the workpiece 1, a point on the intersecting line closest to the surface of the workpiece 1 can be estimated as the processing point 2. Alternatively, when the intersecting line and the surface of the workpiece 1 cross each other, an intermediate point between two points of the intersecting line penetrating the workpiece 1 can be estimated as the processing point 2.

When an angle of the water stream 5a is changed unexpectedly, calculation of the collection distance $D_f$ and the processing distance $D_0$ based on the normally calculated propagation distance $D_p$ can cause a wrong result. By calculating the position of the processing point 2 from measurement results obtained by using the sound sensors, the collection distance $D_f$ and the processing distance $D_0$ can be correctly calculated in a three-dimensional space.

When three sound sensors 10 are used, only one intersecting point is determined in a three-dimensional space, whereby the position of the processing point 2 can be specified with accuracy.

[FOURTH EXAMPLE]

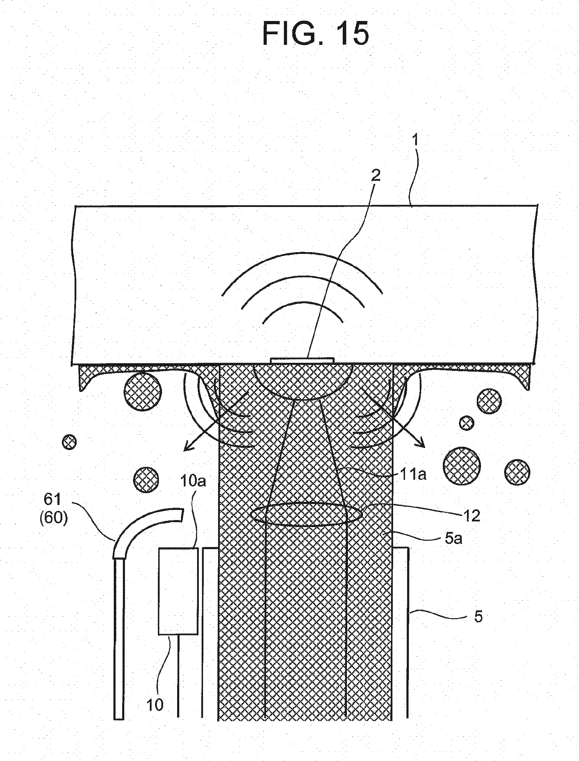

FIG. 15 is a conceptual sectional elevational view illustrating a configuration of a laser processing apparatus according to a fourth example. The present example is a modification of the first example. The laser processing apparatus 100 according to the present example includes a water splash adhesion prevention part 60 for preventing water splashing back at the workpiece 1 from falling on the sound detector 10a of the sound sensor 10.

Specifically, the water splash adhesion prevention part 60 can be realized by using a protection cover 61 as illustrated in FIG. 15. The protection cover 61 is formed in such a direction as to prevent coming water from falling on the sound detector 10a of the sound sensor 10.

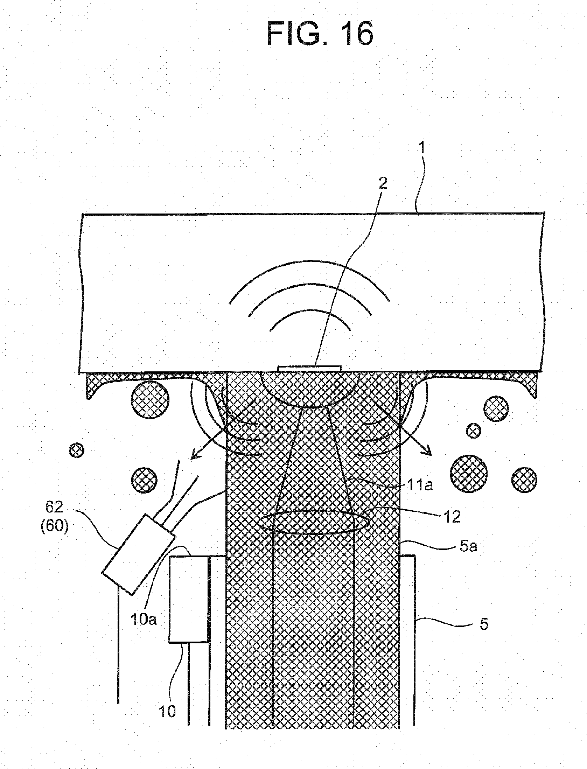

FIG. 16 is a conceptual sectional elevational view illustrating a configuration of a modification of the laser processing apparatus according to the fourth example. In this modification, the laser processing apparatus 100 includes an air blower 62 as the water splash adhesion prevention part 60. The air blower 62 faces a side from which the water splash comes to the sound sensor 10 and blows off the water splash to thereby prevent the water from falling on the sound detector 10a of the sound sensor 10.

When a liquid film is formed on the surface of the sound detector 10a of the sound sensor 10 due to adhesion of the water splash onto the sound detector 10a, a time delay may be caused. Further, when a thickness of the liquid film is changed, sensitivity may also be changed disadvantageously. In the thus configured laser processing apparatus 100 according to the fourth example or the modification of the fourth example, adhesion of the water splash onto the sound detector 10a is prevented, so that the problems such as the sensitivity change due to the water splash does not occur.

[FIFTH EXAMPLE]

The present example is a modification of the first example. The sound sensor 10 according to this fifth example includes a water influence relieving part 70. The water influence relieving part 70 is provided for preventing a change in the sensitivity of the sound sensor 10 due to falling of the water splash caused when the water stream 5a collides with the workpiece 1.

The following describes specific examples of the water influence relieving part 70. The examples include a case where the surface of the sound detector is treated and a case where a special geometric shape is added to the sound detector. The above two cases may be combined to realize the water influence relieving part 70.

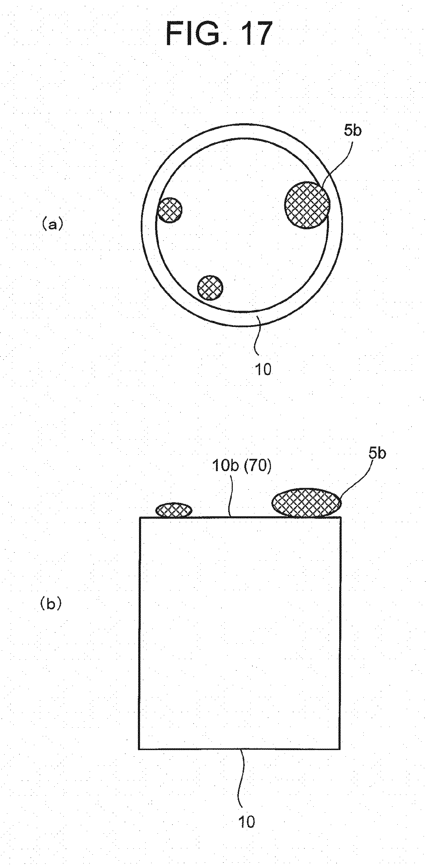

FIGS. 17A and 17B are conceptual views each illustrating a configuration in a case where the sound sensor 10 includes a sound detector 10b that has been subjected to surface treatment that makes wettability of a surface of the sound detector 10b lower, in which FIG. 17A is a plan view, and FIG. 17B is a front view. Examples of the surface treatment that makes wettability of the surface of the sound detector 10b lower include a method of coating a high hydrophobicity material such as oil onto the surface and a method of forming a highly hydrophobic pattern such as pattern having fine convex parts like a lotus leaf on the surface. This prevents the surface of the sound detector 10b from being covered with water 5b of the water splash, so that the problems such as a sensitivity change do not occur.

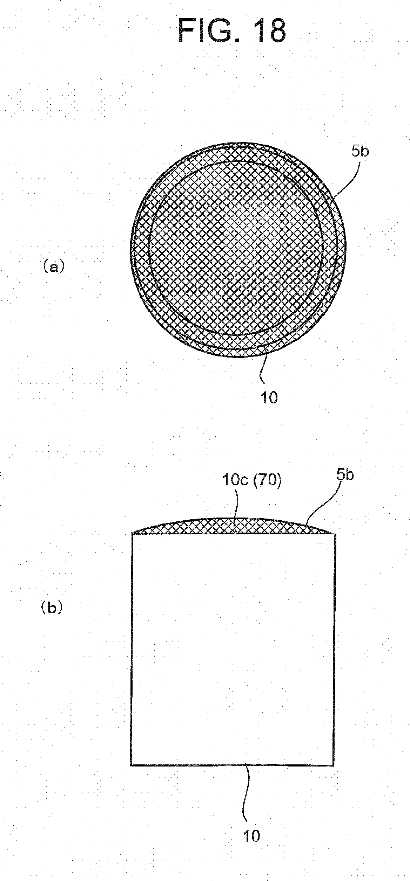

FIGS. 18A and 18B are conceptual views each illustrating a configuration in a case where the sound sensor 10 includes a sound detector 10c that has been subjected to surface treatment that makes wettability of an outer surface of the sound detector 10c higher, in which FIG. 18A is a plan view, and FIG. 18B is a front view. Examples of the surface treatment that makes wettability of the outer surface of the sound detector 10b higher include: a method of coating a high hydrophilicity material such as titanium oxide onto the surface; a method of forming a highly hydrophilic pattern; or a method of alternately forming a highly hydrophilic pattern and a highly hydrophobic pattern on the surface. Thus, even when the water 5b of the water splash arrives at the sound detector 10c, a thickness of the liquid film is not changed due to presence of the hydrophilic coating. Accordingly, the surface of the sound detector 10c is stably covered with the water 5b, whereby the sensitivity change does not occur even if a slight time delay occurs due to generation of the liquid film.

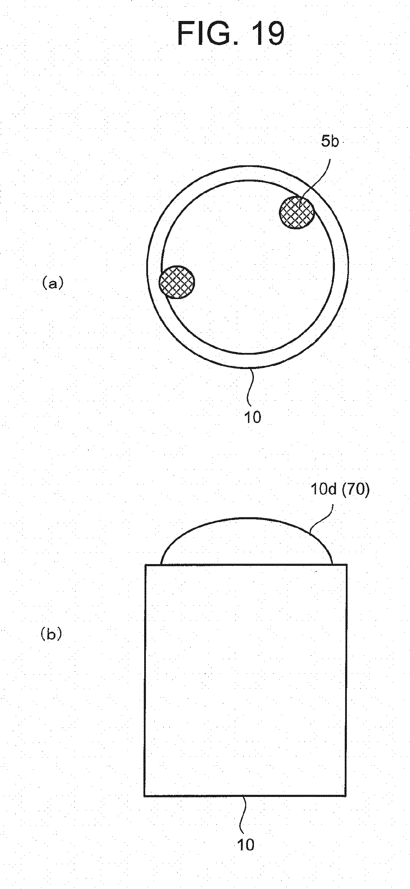

FIGS. 19A and 19B are conceptual view each illustrating a configuration in a case where the sound sensor 10 includes a sound detector 10d on an outer surface on which a convex geometric shape is formed, in which FIG. 19A is a plan view, and FIG. 19B is a front view. With this configuration, even when the water splash arrives at the surface of the sound detector 10d, the water 5b does not stay at the surface. This prevents the sensitivity change.

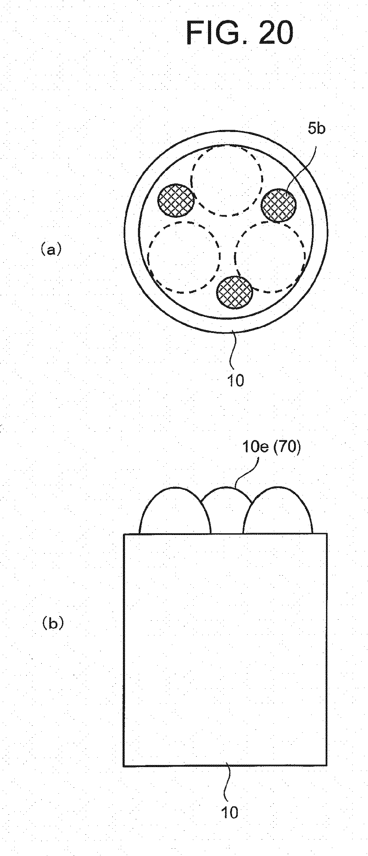

FIGS. 20A and 20B are conceptual view each illustrating a configuration in a case where the sound sensor 10 includes a sound detector 10e on an outer surface on which a geometric shape including convex portions is formed, in which FIG. 20A is a plan view, and FIG. 20B is a front view. With this configuration, even when the water splash arrives at the surface of the sound detector 10e, little water 5b remains, and thus the sensitivity change is suppressed.

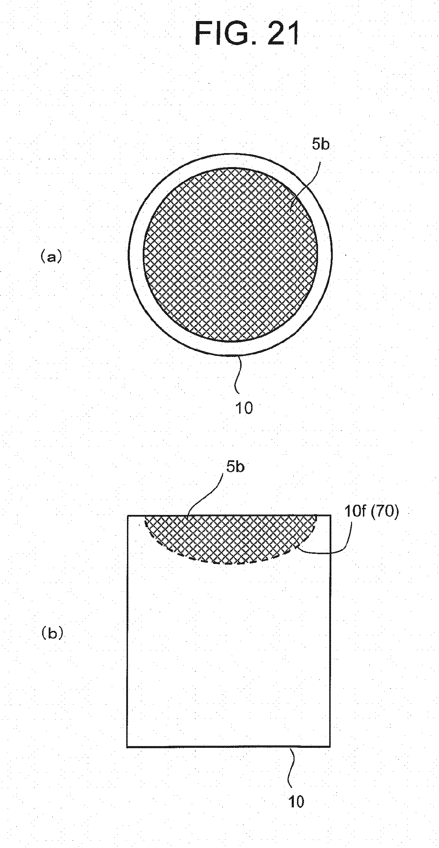

FIGS. 21A and 21B are conceptual view each illustrating a configuration in a case where the sound sensor 10 includes a sound detector 10f on an outer surface on which a concave geometric shape is formed, in which FIG. 21A is a plan view, and FIG. 21B is a front view. With this configuration, the water 5b is stably stored on the surface of the sound detector 10f. This prevents the sensitivity change.

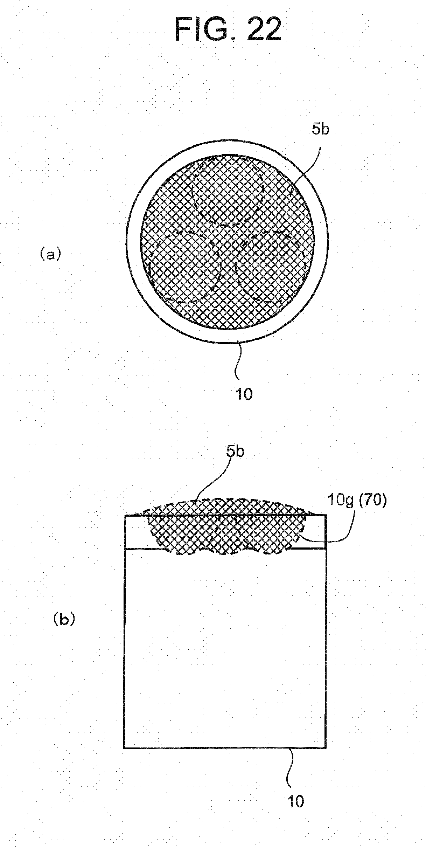

FIGS. 22A and 22B are conceptual view each illustrating a configuration in a case where the sound sensor 10 includes a sound detector 10g on an outer surface on which a geometric shape including concave portions is formed, in which FIG. 22A is a plan view, and FIG. 22B is a front view. With this configuration, the water 5b is stably stored on the surface of the sound detector 10f. This prevents the sensitivity change.

**[SIXTH EXAMPLE]**

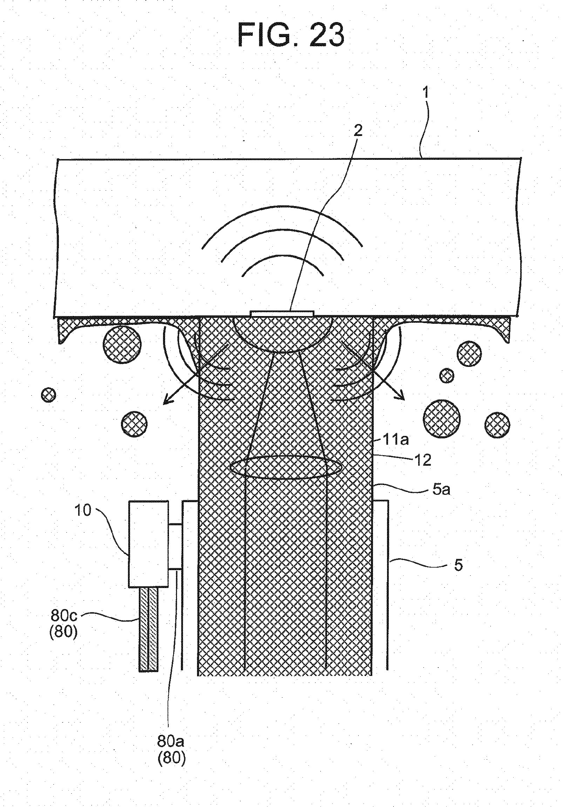

FIG. 23 is a conceptual sectional elevational view illustrating a configuration of a laser processing apparatus according to a sixth example. The present example is a modification of the first example. The sound sensor 10 of the laser processing apparatus according to the present example has an external environment influence relieving part 80. Examples of the external influence on the sound sensor 10 include mechanical vibration, sound noise, and electric noise.

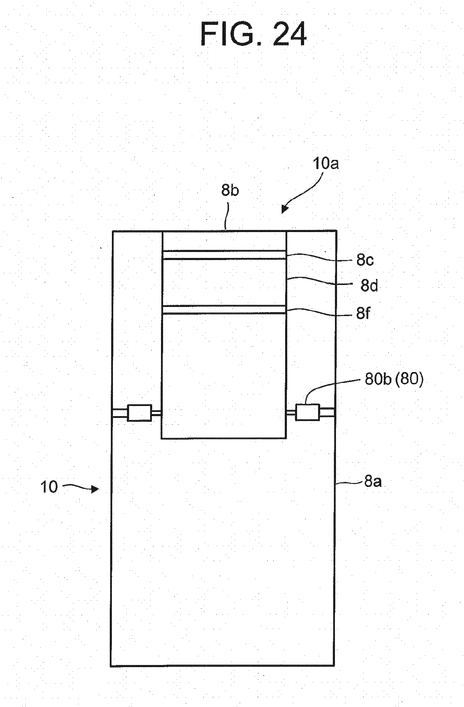

The external environment influence relieving part 80 includes a mechanical vibration suppressing part 80a, a sound noise reducing part 80b (FIG. 24), and an electric noise reducing part 80c.

The mechanical vibration suppressing part 80a is provided between the sound sensor 10 and the water nozzle 5 to which the sound sensor 10 is attached. The mechanical vibration suppressing part 80a is formed from a damper material such as rubber or a spring.

The electric noise reducing part 80c is a part that applies shielding to a cable for transmitting a signal received by the sound sensor 10. The reduction or suppression of the electric noise can be achieved also by power supply stabilizing measures that have a device using a stabilized power source.

FIG. 24 is a vertical cross-sectional view illustrating a configuration of the sound sensor. The sound sensor 10 has a front plate 8b and a piezoelectric vibrator 8d serving as the sound detector 10a, electrodes 8c and 8f sandwiching the piezoelectric vibrator 8d from front and rear sides, and a casing 8a that supports the front plate 8b and houses therein the piezoelectric vibrator 8d and the electrodes 8c and 8f. Further, the sound sensor 10 includes the sound noise reducing part 80b between the piezoelectric vibrator 8d, the electrodes 8c and 8f and the casing 8a. The sound noise reducing part 80b may be provided outside the sound sensor 10, serving also as the mechanical vibration suppressing part 80a.

By mounting the damper inside or outside the sound sensor as described above, a frequency band other than a desired frequency can be cut off to narrow the frequency band of the sound sensor.

Further, by applying filtering to a sound signal at a signal circuit from the sound sensor 10 or at the calculator 30, noise unrelated to the shock wave can be reduced. Examples of the filtering include a band-pass filter, a high-pass filter, a low-pass filter, a band elimination filter, an addition average filter, and a moving average filter, and imaging such as aperture synthesis using signals obtained through multipoint measurement may be performed.

In particular, countermeasures on hardware implementation such as power stabilization and shielding are necessary for reduction in the electric noise; however, filtering on a circuit or a program is also effective because the noise itself is irregular.

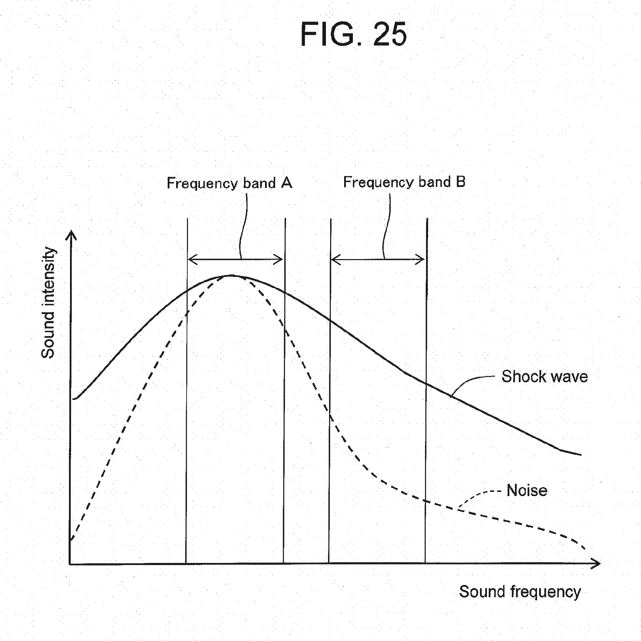

FIG. 25 is a graph for explaining an effect of the laser processing apparatus according to the present example. A horizontal axis represents a sound frequency and a vertical axis represents a sound intensity. A shock wave denoted by a continuous line is captured by the sound sensor 10 as a signal, which includes sound noise denoted by a broken line.

A frequency band A in FIG. 25 is a center frequency band of the noise, in which most of the received signal is the noise. On the other hand, a frequency band B is a frequency band close to a center frequency band of the shock wave and a frequency band in which the noise intensity is low. In such a case, there can be adopted a method of narrowing the frequency band to be processed to the vicinity of the frequency band B where the intensity of the shock wave remains so as to stand off the frequency band A as a center frequency band of the noise. The shock wave itself has wide band characteristics, thus allowing such narrowing to be achieved.

By reducing the noise in the manner as described above, accuracy of a signal received by the sound sensor 10 is enhanced, thereby enhancing accuracy in evaluation of the time width.

[INVENTION]

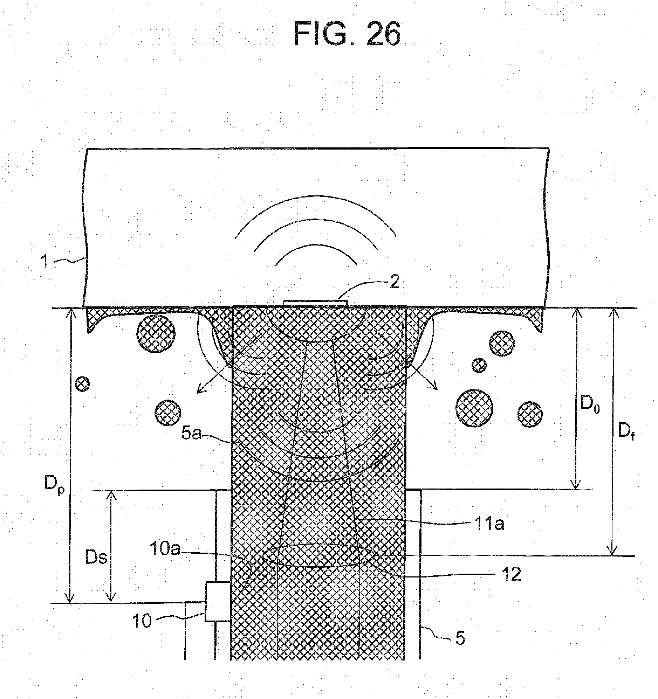

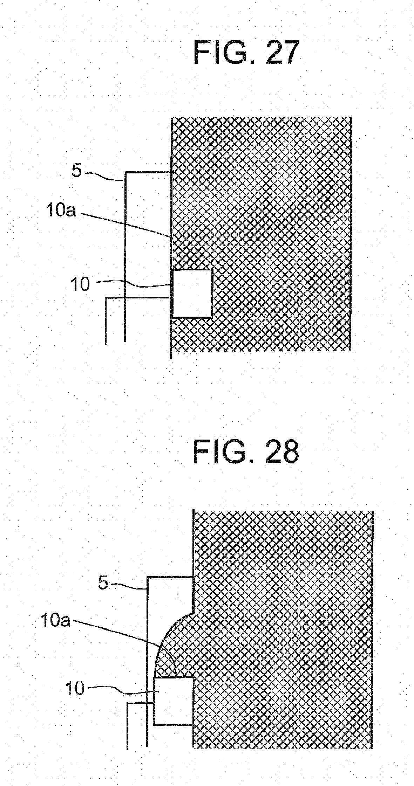

FIG. 26 is a conceptual sectional elevational view illustrating a configuration of a laser processing apparatus according to the present invention. The present embodiment is a modification of the first example. A distance from a leading end of the water nozzle 5 to the sound detector 10a is assumed to be Ds. In the laser processing apparatus according to the present embodiment, the sound sensor 10 is installed on an inner wall surface of the water nozzle 5. The sensor surface of the sound detector 10a faces toward the water stream in the water nozzle 5, and specifically with this embodiment, the sensor surface of the sound detector 5 faces the inner wall surface. However, an installation structure of the sound sensor 10 is not limited to this. For example, installation structures as illustrated in FIGS. 27 or 28 may be possible.

FIG. 27 is a sectional elevational view for explaining a first modification of the installation structure of the sound sensor. The sound sensor 10 is installed such that the sensor surface thereof faces in a water flow direction. FIG. 28 is a sectional elevational view for explaining a second modification of the installation structure of the sound sensor. The sound sensor 10 is provided at a portion obtained by cutting off a part of the inner wall surface of the water nozzle 5 so as to ensure a waveguide.

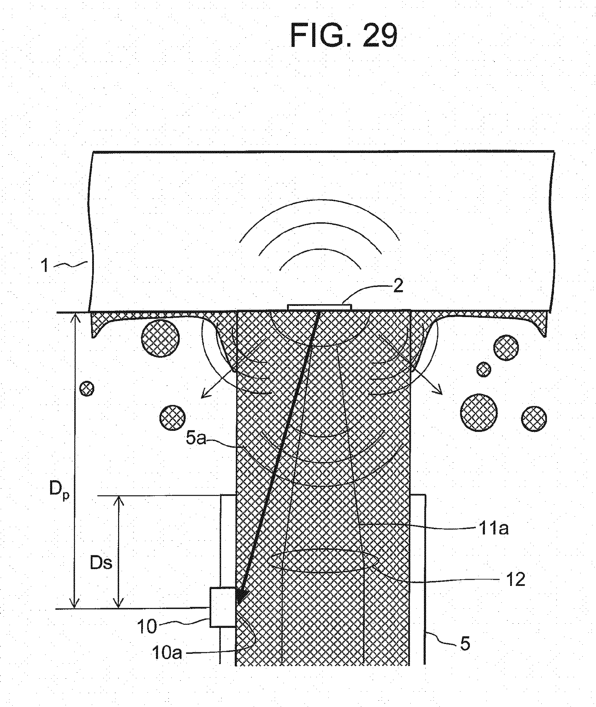

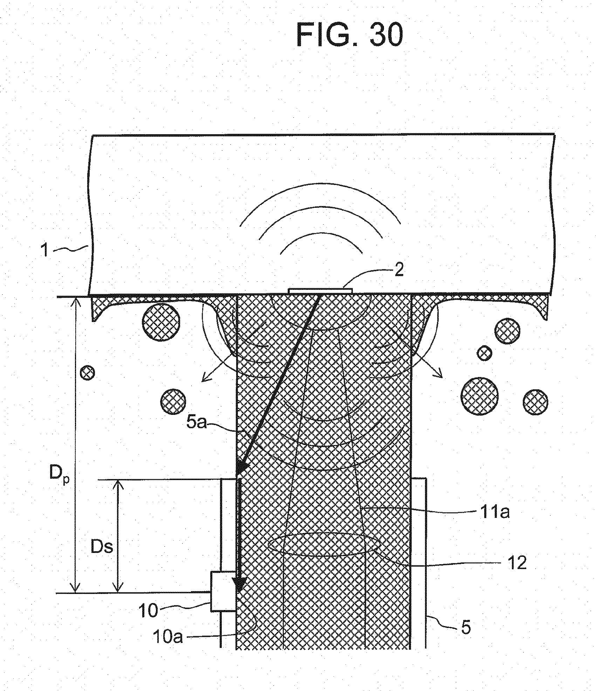

FIG. 29 is a vertical cross-sectional view for explaining a first sound transmission path. FIG. 30 is a vertical cross-sectional view for explaining a second sound transmission path. The sound propagation path to the sound sensor 10 may completely submerge in water as illustrated in FIG. 29. Alternatively, as illustrated in FIG. 30, the sound propagation path may be formed such that the sound propagates in water until it reaches the water nozzle 5, then propagates on the inner wall surface of the water nozzle 5 as a surface wave, and eventually reaches the sound sensor 10.

In a case where the sound propagates completely in water, a time TW required for the sound to travel from the processing point to the sound sensor is represented by TL, and the propagation distance $D_p$ is given by the following equation (4):

$$D_p = TL*VL \qquad \cdots (4)$$

Since Ds is known, the processing distance $D_0$ can be calculated by the following equation (5):

$$D_0 = D_p - Ds \qquad \cdots (5)$$

In a case where the sound propagates on the inner wall of the water nozzle as a surface wave, the time Tw is given by the following equation (6):

$$Tw = TL + Ts \qquad \cdots (6)$$

Ts is a propagation time of the surface wave and given by the following equation (7):

$$Ts = Ds/Vs \qquad \cdots (7)$$

Vs is a sound velocity of the surface wave and Ds is also known. Thus, TL is given by the following equation (8):

$$TL = Tw - Ts \qquad \cdots (8)$$

As a result, the processing distance $D_0$ can be obtained by the following equation (9):

$$D_0 = TL/VL \qquad \cdots (9)$$

As described above, the processing distance $D_0$ can be calculated also in the present embodiment.

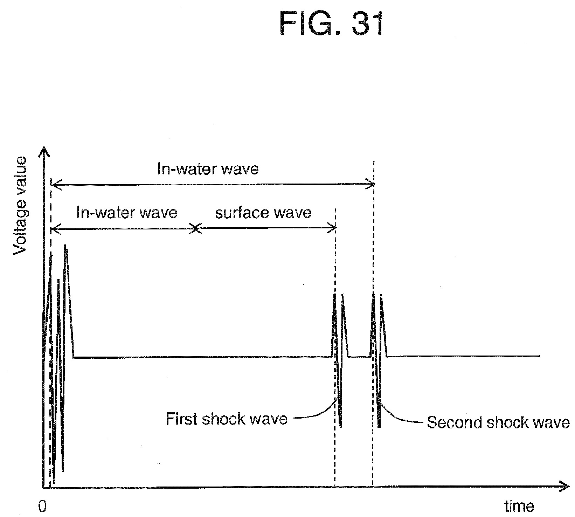

FIG. 31 is a waveform diagram illustrating a received waveform image of the sound sensor of the laser processing apparatus according to the invention. In FIG. 31, a horizontal axis represents time, and a starting point of each oscillation period is set to 0. A vertical axis represents a voltage value captured by the sound sensor as a received waveform. After transmission, a first shock wave arrives, followed by a second shock wave.

The first shock wave corresponds to a shock wave that propagates as a surface wave in the middle of the propagation, and the second shock wave corresponds to a shock wave that propagates completely in water. In general, a sound propagation speed of the surface wave is higher than that in water, so that the first shock wave arrives first.

As described above, the processing distance $D_0$ can be calculated by using one of the first and second shock waves. Alternatively, an average of the first and second shock waves may be adopted.

The sound sensor 10 has directivity. Thus, as a method for detecting the sound propagating in water or on the surface of the water nozzle 5 with high sensitivity, a shape of the sound sensor 10 may be adjusted. However, it is not realistic to adjust the shape of the sound sensor 10 every time when an installation position or posture of the sound sensor 10 is changed. Thus, a sound shoe is interposed between the sound sensor 10 and the water nozzle 5 so as to adjust propagation performance of the sound to the sound sensor 10.

A material for the sound shoe is desirably one with excellent machinability. Further, in terms of sound propagation, the material desirably has a sound velocity close to that of water and a density lower than that of metal. For example, acrylic may be suitably used.

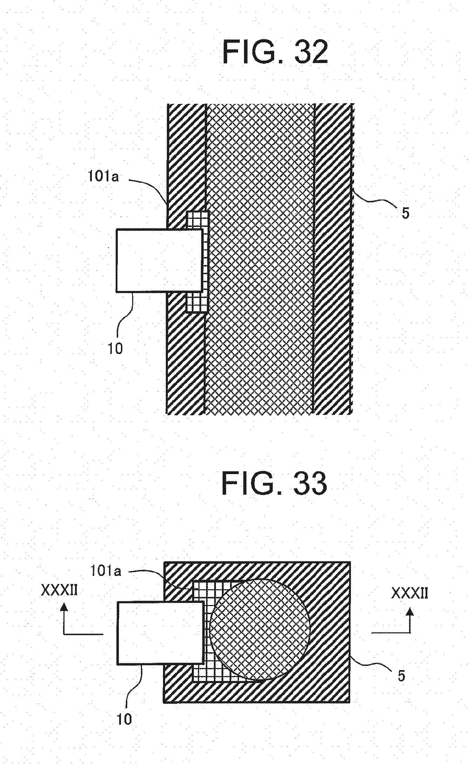

FIGS. 32 to 43 each illustrate an installation structure of the sound shoe.

FIG. 32 is a vertical cross-sectional view illustrating an installation structure taken along and viewed from a line XXXII-XXXII of FIG. 33 in a case where a sound shoe 101a is formed into a columnar shape having a horizontally extending axis. FIG. 33 is a cross-sectional plan view. The sound shoe 101a has a shape obtained by removing a portion corresponding to a cross-part of a flow path of the water nozzle 5. By forming the sound shoe 101a into the columnar shape conforming to the inner wall of the water nozzle, it is possible to prevent the sound shoe 101a from being a disturbance against the water stream. With this installation structure, the sensor surface of the sound detector 10a of the sound sensor 10 also faces toward the water stream in the water nozzle 5.

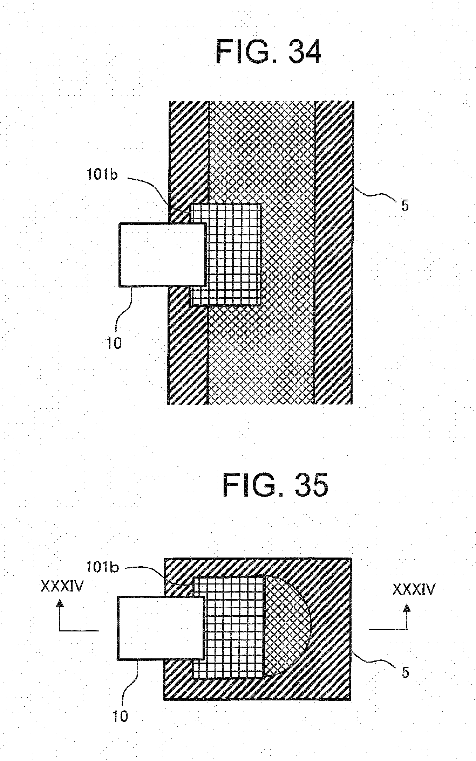

FIG. 34 is a vertical cross-sectional view illustrating an installation structure taken along and viewed from a line XXXIV-XXXIV of FIG. 35 in a case where a sound shoe is formed into a flat-plate shape. FIG. 35 is a cross-sectional plan view. By forming the sound shoe 101b into the flat-plate shape (disk shape), the outer shape of the sound shoe 101b is maintained even when the sound shoe 101b is rotated around a Φ axis, so that stabilization of the sensitivity is maintained.

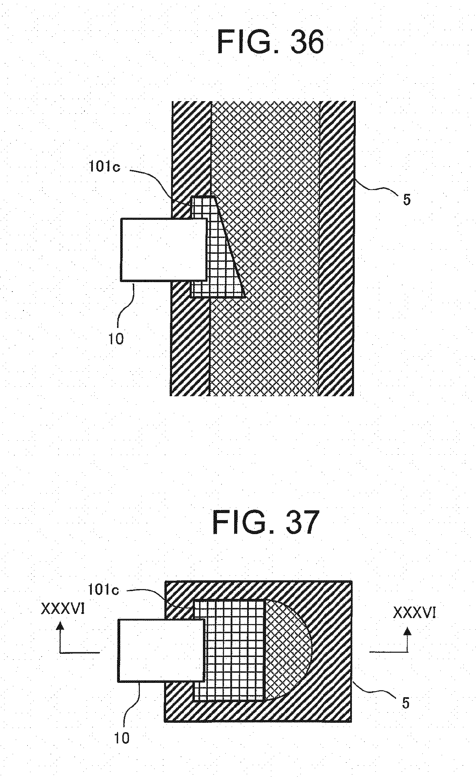

FIG. 36 is a vertical cross-sectional view illustrating an installation structure taken along and viewed from a line XXXVI-XXXVI of FIG. 37 in a case where a sound shoe 101c is formed into a tapered shape. FIG. 37 is a cross-sectional plan view. By forming the sound shoe 101c into the tapered shape and by disposing it such that a lower end surface thereof is made to face the processing point, intensity of an obtained shock wave can be increased.

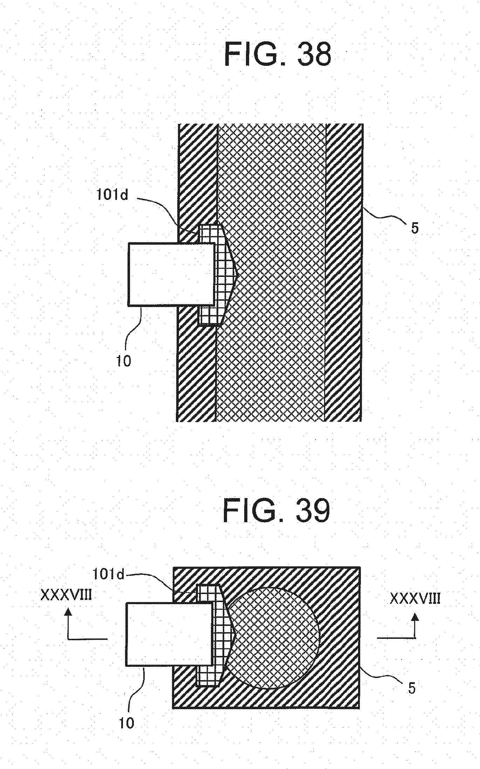

FIG. 38 is a vertical cross-sectional view illustrating an installation structure taken along and viewed from a line XXXVIII-XXXVIII of FIG. 39 in a case where a sound shoe 101d is formed into a cone shape. FIG. 39 is a cross-sectional plan view. By forming the sound shoe 101d into a cone shape, the both of effect by the sound shoe 101b having the flat-plate shape and effect by the sound shoe 101c having the tapered shape can be obtained.

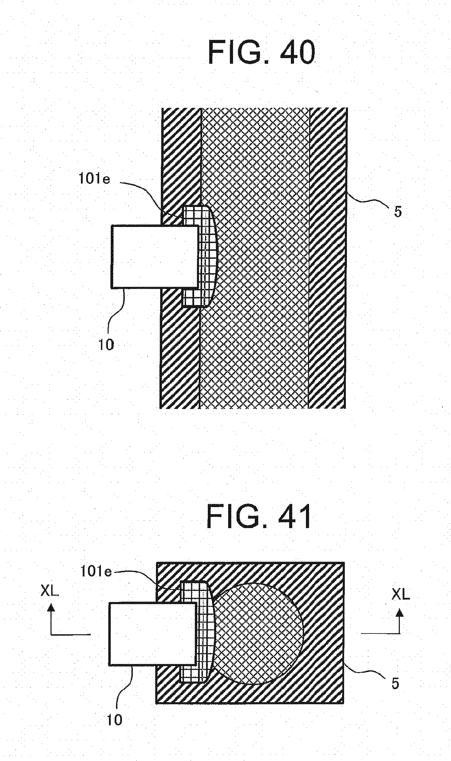

FIG. 40 is a vertical cross-sectional view illustrating an installation structure taken along and viewed from a line XL-XL of FIG. 41 in a case where a sound shoe 101e is formed into a rotary semielliptical shape. FIG. 41 is a cross-sectional plan view. By forming the sound shoe 101e into the rotary semielliptical shape, a similar effect as that by the sound shoe 101d having the cone shape can be expected to be obtained.

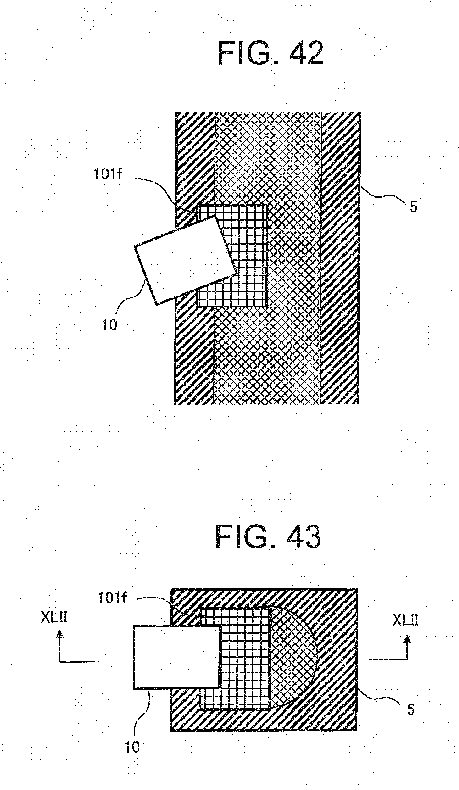

FIG. 42 is a vertical cross-sectional view illustrating an installation structure taken along and viewed from a line XLII-XLII of FIG. 43 in a case where the sound sensor 10 is disposed in an inclined manner. FIG. 43 is a cross-sectional plan view. By inclining the sound sensor 10 in a sound shoe 101f, sensitivity improvement can be expected. Disposing in such a manner as this may be combined with the cases shown by FIG. 32 to FIG. 41.

[SEVENTH EXAMPLE]

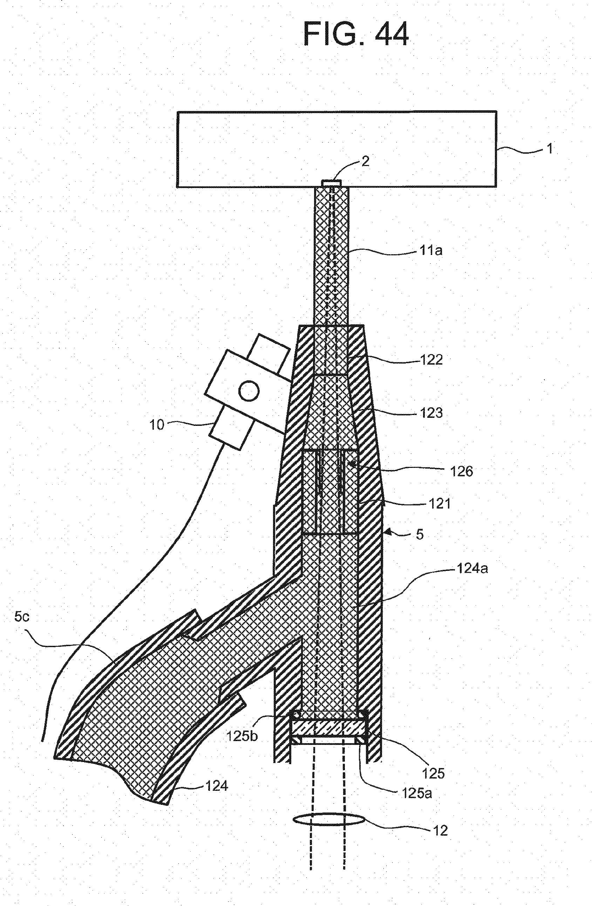

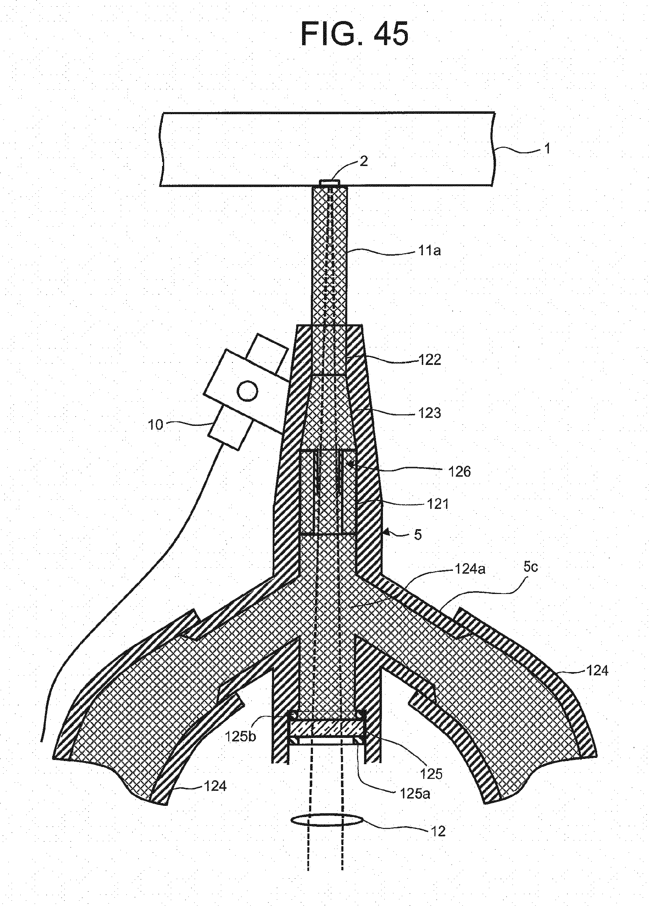

FIG. 44 is a conceptual vertical cross-sectional view illustrating a configuration of a laser processing apparatus according to a seventh example. FIG. 45 is a conceptual vertical cross-sectional view illustrating a configuration of a modification of a laser processing apparatus according to a seventh example. Those examples are modifications of the first example. In the present example, water supply to the water nozzle 5 is provided by water flow in one pipe or more pipes meeting from different directions. In the configuration illustrated in FIG. 45, water flow comes from two pipes. Each pipe is a flexible pipe such as a hose 124. So, the light collector 12 and the water nozzle 5 shown in FIG. 44 and FIG. 45 are able to move in a unified manner.

Inside the water nozzle 5, a cylindrical buffer layer 121 that receives the water stream and a cylindrical injection layer 122 having a diameter smaller than that of the buffer layer 121 are continuously connected through a tapered part 123. The laser light is transmitted through the cylindrical buffer layer 121 and the cylindrical irradiation layer 122.

When the water flow is supplied from the two or more directions, in the buffer layer 121, the water stream in the hoses 124 from different directions join at a meeting part 124a each other. For example, as shown in FIG 44 and FIG. 45, each hose 124 may be connected with each nozzle 5c provided in the water nozzle 5 and banded together by a band not shown. Though the examples, in which a mounting angle is about 60 degree to the direction of flow-out from the cylindrical irradiation layer 122, are shown in FIG. 44 and FIG. 45, the mounting angle may be less or may be larger up to 90 degree.

As described above, the number of the water supply routes is not limited to one, but may be two or more. Further, the water supply routes may be the same or different in terms of diameter and/or flow rate.

When the air is taken into the water flow flowing out from the tip of the irradiation layer 122 to spread radius of the water flow, laser light transmission property might be affected. By suppressing the spreading of water flow, the long distance between the end of the irradiation layer 122 and the workpiece 1 can be acquired.

As described above, in order to suppress violent scattering of the water flow which is supplied from the irradiation layer 122 and hits the workpiece 1, a flow straightener 126 may be provided. The flow straightener 126 straightens the turbulent water stream. The flow straightener 126 suppresses scattering of water flow after coming up at the workpiece 1. The configuration of the flow straightener 126 will be described referring FIG. 45.

A disk-shaped air-water separating window 125, through which the razor light can penetrate, is provided at the end of upstream end of the buffer layer 121. The separating window 125 constitutes a part of a boundary between the inner water in the water nozzle 5 and the outer air. The light collector 12 is located out of the separating window 125, or in the outer air. The laser light passes through the light collector 12 and is then transmitted to the processing point 2 through the flow straightener 126.

An O-ring is provided at inner side, or water side of the separating window 125. A pressing plate 125a having an opening formed at the center area. A water seal-tightness of the separating window 125 is secured by compressing the O-ring 125b with the pressing plate 125a.

The sound sensor 10 may be installed outside the water nozzle 5 as illustrated in FIG. 44 and FIG. 45.

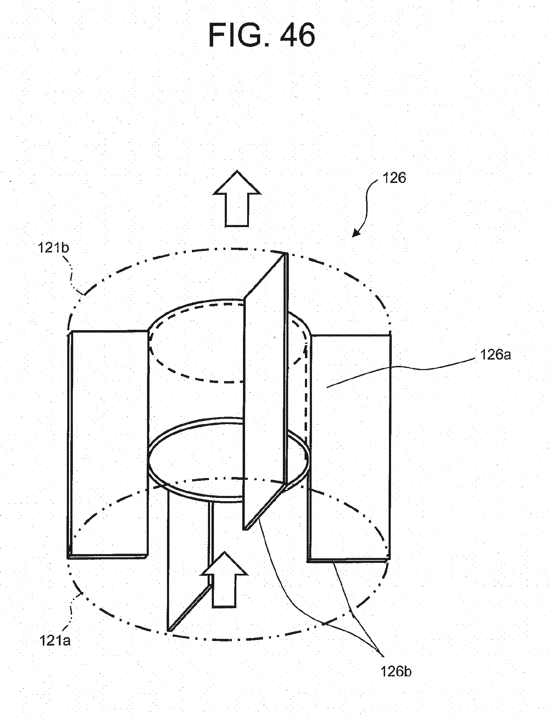

FIG. 46 is a conceptual perspective view illustrating a configuration of a flow straightener in a laser processing apparatus of the present embodiment. The flow straightener 126 includes a hollow cylindrical flow smoothing cylinder 126a and four flow smoothing plates 126b. Each flow smoothing plate 126b is attached at its side surface to the flow smoothing cylinder 126a. Each flow smoothing plate 126b extends along the axis of and spreads to radial direction of the flow smoothing cylinder 126a. Each flow smoothing plate 126b overhangs to upstream from the flow smoothing cylinder 126a. The inner diameter of the flow smoothing cylinder 126a is larger than the outer diameter of the laser light beam in order to make the laser light pass through the flow smoothing cylinder 126a.

Each of two circles 121a and 121b, shown as two-dot chain line in FIG. 46, shows a part of outer surface of the buffer layer 121. The position of the circle 121a is upper stream than the position of the circle 121b. A cylindrical plane containing the circles 121a and 121b, the flow smoothing cylinder 126a and the flow smoothing plates 126b divide the buffer layer 121 into a flow path in the flow smoothing cylinder 126a and four flow paths divided from the annular section by the four flow smoothing plates 126b. The number of the flow smoothing plates 126b is not limited to four, but may be three or more than four.

Thus forming the flow paths along the axis of the water nozzle 5 can fix up the flow path such as suppressing the turbulent flow.

Though the example in which the flow smoothing plate 126b spreads radially and extends axially is shown, they may be inclined from the axial or/and radial direction of the flow smoothing plate 126b. Alternatively, flow smoothing wing may be provided along inner surface of the water nozzle 5.

As described above, the light collector 12 and the water nozzle 5 shown in FIG. 44 are able to move in a unified manner, and the water nozzle 5 can supply the straightened water flow to the processing point 2.

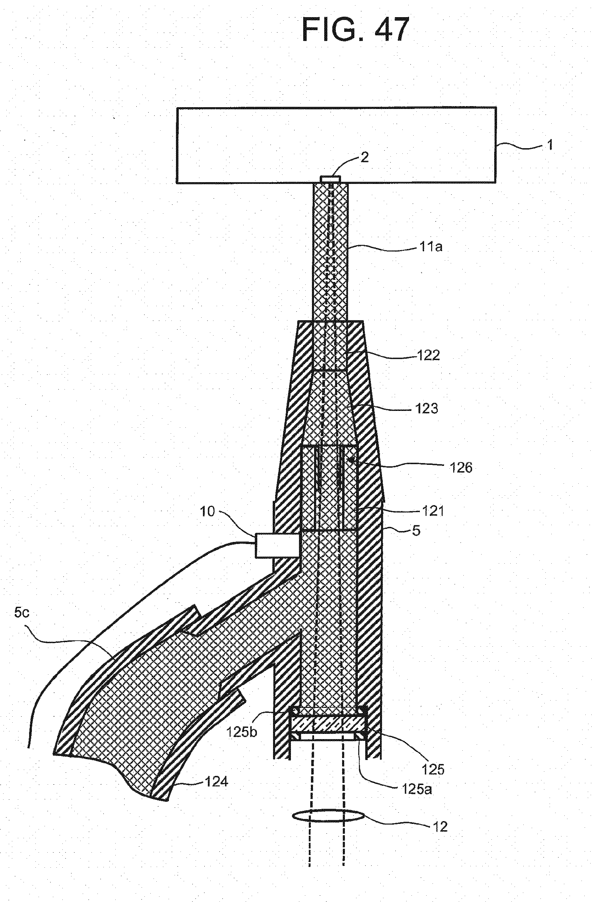

FIG. 47 is a conceptual vertical cross-sectional view illustrating a modification of the present embodiment. The sound sensor 10 is installed inside the water nozzle 5 as illustrated in FIG. 47. The sound sensor 10 may be installed upstream of the flow straightener 126, or sometimes preferably installed downstream of the buffer layer 121 so as to avoid influence of a turbulence.

**[OTHER EMBODIMENTS]**

While several embodiments of the present invention have been described, these embodiments have been presented by way of example and are not intended to limit the scope of the invention.

The embodiments may be embodied in other various forms. Various omissions, replacements and changes may be made without departing from the scope of the appended claims.

**Claims**

1. A laser processing apparatus (100) comprising:

   a laser light source (11) configured to emit a laser light (11a);
   a light collector (12) configured to collect the laser light on a workpiece which is a target of surface hardening treatment;
   a water stream transmitter (5) configured to supply a water stream to a surface to be treated of the workpiece;
   a sound sensor (10) configured to receive a sound coming from the surface to be treated, **characterized in that** the sound sensor (10) being provided on an inner wall surface of the water stream transmitter (5); wherein
   a timer configured to detect a detected time width from a reference time point to a time point when the sound sensor (10) receives the sound; and
   a distance calculator configured to calculate, based on the detected time width, a distance from one of the water stream transmitter (5) and the light collector (12) to the surface to be processed, and wherein
   the detected time width includes a reference time width (Twi) with respect to a predetermined reference distance, and
   the distance calculator is configured to calculate the propagation distance between the laser light irradiation apparatus (100) and the processing target based on a difference (dTw) of the detected time as compared to the reference time width (Twi).

2. The laser processing apparatus (100) according to claim 1, further comprising a light detector (13) configured to detect the laser light (11a), wherein
   the timer is configured to use a signal from the light detector (13) to detect the detected time width.

3. The laser processing apparatus (100) according to any one of claims 1 or 2, wherein
   the sound sensor (10) includes a sound detector (10a), and
   the sound detector (10a) is facing toward the water stream flowing inside the water stream transmitter (5).

4. The laser processing apparatus (100) according to any one of claims 1 to 3, wherein
   the water stream transmitter (5) comprises a flow straightener (126) configured to straighten the water flow.

5. A distance measurement method comprising:

   a water stream supply step supplying a water stream to a surface to be treated of a workpiece via a water stream transmitter (5); **characterized by** the following steps
   a reference measurement step operated with the water stream supply step;
   an irradiation step in which the timer detects a detected time width regarding laser light irradiation with a laser light irradiation apparatus (100), the detected time width being configured to be a time width from a time point of the laser light irradiation to a time point of the reception of the sound generated with the laser light irradiation by a sound sensor (10) provided on an inner wall surface of the water stream transmitter (5); and a distance calculation step of calculating a propagation distance between the laser light irradiation apparatus (100) and the processing target,

**characterized in that**:

in the reference measurement step, a timer acquires a reference time width (Twi) with respect to a predetermined reference distance, operated with the water stream supply step, and the propagation distance between the laser light irradiation apparatus (100) and the processing target is calculated based on the reference distance and a difference (dTw) between the detected time width detected in the irradiation step and the reference time width (Twi).

6. A laser processing method comprising a step of performing the distance measurement method according to claim 5, wherein the laser light irradiation by the laser light irradiation apparatus (100) in the irradiation step is configured to be irradiated onto one of processing target points of a workpiece.

7. The laser processing method according to claim 6, further comprising:

a distance determination step of determining whether or not the calculated propagation distance is proper; a distance correction step of correcting the distance, when the calculated propagation distance is not proper, and then returning to the irradiation step; a processing determination step of determining, when the calculated propagation distance is determined to be proper, that the processing has been made to the processing target point corresponding to the irradiation target point that has been subjected to irradiation in the irradiation step and determining whether or not all the processing target points have been processed; and a moving step of setting, when not all the points have been determined to be processed in the processing determination step, any one of the processing target points that have not been processed as the irradiation target point and then returning to the irradiation step.

**Patentansprüche**

1. Laserbearbeitungsvorrichtung (100), umfassend:

eine Laserlichtquelle (11), die dafür konfiguriert ist, ein Laserlicht (11a) zu emittieren; einen Lichtsammler (12), der dafür konfiguriert ist, das Laserlicht auf einem Werkstück zu sammeln, welches ein Ziel einer Oberflächenhärtungsbehandlung ist; einen Wasserstromsender (5), der dafür konfiguriert ist, einer zu behandelnden Oberfläche des Werkstücks einen Wasserstrom zuzuführen; einen Schallsensor (10), der dafür konfiguriert ist, einen von der zu behandelnden Oberfläche kommenden Schall zu empfangen, **dadurch gekennzeichnet, dass** der Schallsensor (10) an einer Innenwandfläche des Wasserstromsenders (5) vorgesehen ist; einen Timer, der dafür konfiguriert ist, eine detektierte Zeitspanne von einem Referenzzeitpunkt bis zu einem Zeitpunkt, zu dem der Schallsensor (10) den Schall empfängt, zu detektieren; und einen Entfernungsrechner, der dafür konfiguriert ist, auf der Grundlage der detektierten Zeitspanne eine Entfernung von einem des Wasserstromsenders (5) und des Lichtsammlers (12), zu der zu bearbeitenden Oberfläche zu berechnen, und wobei die detektierte Zeitspanne eine Referenzzeitspanne (Twi) in Bezug auf eine vorbestimmte Referenzentfernung einschließt, und der Entfernungsrechner dafür konfiguriert ist, die Ausbreitungsentfernung zwischen der Laserlicht-Bestrahlungsvorrichtung (100) und dem Bearbeitungsziel auf der Grundlage einer Differenz (dTw) der detektierten Zeit im Vergleich zur Referenzzeitspanne (Twi) zu berechnen.

2. Laserbearbeitungsvorrichtung (100) nach Anspruch 1, ferner einen Lichtdetektor (13) umfassend, der dafür konfiguriert ist, das Laserlicht (11a) zu detektieren, wobei der Timer dafür konfiguriert ist, ein Signal vom Lichtdetektor (13) zu verwenden, um die detektierte Zeitspanne zu detektieren.

**3.** Laserbearbeitungsvorrichtung (100) nach einem der Ansprüche 1 oder 2, wobei

der Schallsensor (10) einen Schalldetektor (10a) einschließt, und
der Schalldetektor (10a) dem Wasserstrom zugewandt ist, der im Inneren des Wasserstromsenders (5) fließt.

**4.** Laserbearbeitungsvorrichtung (100) nach einem der Ansprüche 1 bis 3, wobei
der Wasserstromsender (5) einen Stromausrichter (126) umfasst, der dafür konfiguriert ist, den Wasserstrom auszurichten.

**5.** Entfernungsmessungsverfahren, umfassend:
einen Wasserstromzuführungsschritt, der einer zu behandelnden Oberfläche eines Werkstücks über einen Wasserstromsender (5) einen Wasserstrom zuführt; **gekennzeichnet durch** die folgenden Schritte:

einen Referenzmessschritt, der mit dem Wasserstromzuführungsschritt verrichtet wird;
einen Bestrahlungsschritt, in dem der Timer eine detektierte Zeitspanne bezüglich der Laserlichtbestrahlung mit einer Laserlicht-Bestrahlungsvorrichtung (100) detektiert, wobei die detektierte Zeitspanne so konfiguriert ist, dass sie eine Zeitspanne von einem Zeitpunkt der Laserlichtbestrahlung bis zu einem Zeitpunkt des Empfangs des Schalls ist, der mit der Laserlichtbestrahlung durch einen Schallsensor (10) erzeugt wird, welcher an einer Innenwandfläche des Wasserstromsenders (5) vorgesehen ist; und
einen Entfernungsberechnungsschritt des Berechnens einer Ausbreitungsentfernung zwischen der Laserlicht-Bestrahlungsvorrichtung (100) und dem Bearbeitungsziel,
**dadurch gekennzeichnet, dass**:

in dem Referenzmessschritt, der mit dem Wasserstromzuführungsschritt verrichtet wird, ein Timer eine Referenzzeitspanne (Twi) in Bezug auf eine vorbestimmte Referenzentfernung erlangt, und
die Ausbreitungsentfernung zwischen der Laserlicht-Bestrahlungsvorrichtung (100) und dem Bearbeitungsziel auf der Grundlage der Referenzentfernung und einer Differenz (dTw) zwischen der detektierten Zeitspanne, die im Bestrahlungsschritt detektiert wird, und der Referenzzeitspanne (Twi) berechnet wird.

**6.** Laserbearbeitungsverfahren, umfassend einen Schritt des Durchführens des Entfernungsmessungsverfahrens nach Anspruch 5,
wobei die Laserlichtbestrahlung durch die Laserlicht-Bestrahlungsvorrichtung (100) im Bestrahlungsschritt dafür konfiguriert ist, auf einen von Bearbeitungszielpunkten eines Werkstücks gestrahlt zu werden.

**7.** Laserbearbeitungsverfahren nach Anspruch 6, ferner umfassend:

einen Entfernungsbestimmungsschritt des Bestimmens, ob die berechnete Ausbreitungsentfernung richtig ist oder nicht;
einen Entfernungskorrekturschritt des Korrigierens der Entfernung, wenn die berechnete Ausbreitungsentfernung nicht korrekt ist, und des darauffolgenden Zurückkehrens zum Bestrahlungsschritt;
einen Bearbeitungsbestimmungsschritt des Bestimmens, wenn die berechnete Ausbreitungsentfernung als richtig bestimmt wird, dass die Bearbeitung an demjenigen Bearbeitungszielpunkt vorgenommen worden ist, der dem Bestrahlungszielpunkt entspricht, der im Bestrahlungsschritt der Bestrahlung unterzogen worden ist, und des Bestimmens, ob alle Bearbeitungszielpunkte bearbeitet worden sind oder nicht; und
ein Bewegungsschritt des Festlegens eines beliebigen der Bearbeitungszielpunkte, die nicht bearbeitet worden sind, als den Bestrahlungszielpunkt, wenn im Bearbeitungsbestimmungsschritt bestimmt worden ist, dass nicht alle Punkte bearbeitet wurden, und des darauffolgenden Rückkehrens zum Bestrahlungsschritt.

**Revendications**

**1.** Appareil de traitement laser (100) comprenant :

une source de lumière laser (11) configurée pour émettre une lumière laser (11a),
un collecteur de lumière (12) configuré pour collecter la lumière laser sur une pièce de fabrication qui est une cible d'un traitement de durcissement de surface,
un dispositif émetteur de courant d'eau (5) configuré pour alimenter un courant d'eau sur une surface à traiter de la pièce de fabrication,
un capteur de bruit (10) configuré pour recevoir un bruit provenant de la surface à traiter, **caractérisé en ce**

**que** le capteur de bruit (10) est agencé sur une surface de paroi intérieure du dispositif émetteur de courant d'eau (5),

un chronométreur configuré pour détecter une durée de temps détectée à partir d'un instant de référence jusqu'à un moment où le capteur de bruit (10) reçoit le bruit, et

un calculateur de distance configuré pour calculer, en fonction de la durée de temps détectée, une distance de l'un parmi le dispositif émetteur de courant d'eau (5) et le collecteur de lumière (12) jusqu'à la surface à traiter, et dans lequel

la durée de temps détectée inclut une durée de référence (Twi) associée à une distance de référence prédéterminée, et

le calculateur de distance est configuré pour calculer la distance de propagation entre l'appareil d'irradiation de lumière laser (100) et la cible à traiter sur la base d'une différence (dTw) de la durée de temps détectée par rapport à la durée de temps de référence (Twi).

2. Appareil de traitement laser (100) selon la revendication 1, comprenant en outre un détecteur de lumière (13) configuré pour détecter la lumière laser (11a), dans lequel

le chronométreur est configuré pour utiliser un signal du détecteur de lumière (13) pour détecter la durée de temps détectée.

3. Appareil de traitement laser (100) selon l'une quelconque des revendications 1 ou 2, dans lequel :

le capteur de bruit (10) inclut un détecteur de bruit (10a), et

le détecteur de bruit (10a) est orienté vers le courant d'eau circulant à l'intérieur du dispositif émetteur de courant d'eau (5).

4. Appareil de traitement laser (100) selon l'une quelconque des revendications 1 à 3, dans lequel

le dispositif émetteur de courant d'eau (5) comprend un redresseur d'écoulement (126) configuré pour redresser l'écoulement d'eau.

5. Procédé de mesure de distance comprenant :

une étape d'alimentation de courant d'eau alimentant un courant d'eau jusqu'à une surface à traiter d'une pièce de fabrication par l'intermédiaire d'un dispositif émetteur de courant d'eau (5), **caractérisé par** les étapes suivantes :

une étape de mesure de référence opérée avec l'étape d'alimentation de courant d'eau,

une étape d'irradiation dans laquelle le chronométreur détecte une durée de temps détectée concernant une irradiation de lumière laser avec un appareil d'irradiation de lumière laser (100), la durée de temps détectée étant configurée pour être une durée de temps depuis un instant d'irradiation de lumière laser jusqu'à un moment de la réception du bruit produit par l'irradiation de lumière laser par un capteur de bruit (10) agencé sur une surface de paroi intérieure du dispositif émetteur de courant d'eau (5), et

une étape de calcul de distance consistant à calculer une distance de propagation entre l'appareil d'irradiation de lumière laser (100) et la cible à traiter,

**caractérisé en ce que** :

dans l'étape de mesure de référence opérée avec l'étape d'alimentation en courant d'eau, un chronométreur recueille une durée de temps de référence (Twi) associée à une distance de référence prédéterminée, et

la distance de propagation entre l'appareil d'irradiation de lumière laser (100) et la cible à traiter est calculée sur la base de la distance de référence et d'une différence (dTw) entre la durée de temps détectée dans l'étape d'irradiation et la durée de temps de référence (Twi).

6. Procédé de traitement par laser comprenant une étape d'exécution du procédé de mesure de distance selon la revendication 5,

dans lequel l'irradiation de lumière laser par l'appareil d'irradiation de lumière laser (100) dans l'étape d'irradiation est configurée pour être irradiée sur un des points cibles à traiter d'une pièce de fabrication.

7. Procédé de traitement par laser selon la revendication 6, comprenant en outre :

une étape de détermination de distance consistant à déterminer si oui ou non la distance de propagation calculée est correcte,

une étape de correction de distance consistant à corriger la distance lorsque la distance de propagation calculée n'est pas correcte, et à revenir ensuite à l'étape d'irradiation,

une étape de détermination de traitement consistant à déterminer, lorsque la distance de propagation calculée est déterminée comme étant correcte, que le traitement a été réalisé sur le point cible à traiter correspondant au point cible d'irradiation qui a été exposé à une irradiation dans l'étape d'irradiation et à déterminer si oui ou non tous les points cibles à traiter ont bien été traités, et

une étape de déplacement consistant à paramétrer, lorsque tous les points cibles ne sont pas déterminés comme étant traités dans l'étape de détermination de traitement, n'importe lequel des points cibles de traitement qui n'ont pas été traités en tant que point cible d'irradiation et à revenir ensuite à l'étape d'irradiation.

# FIG. 1

Laser processing apparatus

1

2

5a

11a

10a

10

12

5

40

controller

Laser light source

11

Water stream source

21

30

Calculator

Timer
(Time width
acquisition part)

31

Distance
calculator
(Distance
calculation part)

32

100

# FIG. 2

# FIG. 3

# FIG. 4

# FIG. 5

# FIG. 6

# FIG. 7

(a)

(b)

# FIG. 8

# FIG. 9

# FIG. 10

```
┌─────────────────────────────────────┐
│  Detecting and acquiring reference   │──── S01
│  time width with respect to          │
│  reference distance                  │
└─────────────────────────────────────┘
                  │
                  ▼
┌─────────────────────────────────────┐
│       Irradiation of laser light     │──── S02
└─────────────────────────────────────┘
                  │
                  ▼
┌─────────────────────────────────────┐
│     Aquring propagation time and     │──── S03
│   calculating propagation distance   │
│    calculating convergence distance  │
│        and processing distance       │
└─────────────────────────────────────┘
                  │
                  ▼
        ╱ Convergence ╲
       ╱ distance falls ╲──── S04
       ╲ within proper  ╱
        ╲   range ?    ╱
            │ YES
            ▼
        ╱ All of processing ╲──── S06
        ╲ target fonished ? ╱
            │ YES
            ▼
         ( END )
```

S05 — Correcting convergence distance

S07 — Moving processing point

NO (from S04)

NO (from S06)

# FIG. 11

(a) — Voltage value vs time. Ti, Twi, Te, Shock wave

(b) — Voltage value vs time. Ti, Twi, dTw, Te, Shock wave

# FIG. 12

# FIG. 13

# FIG. 14

# FIG. 15

# FIG. 16

# FIG. 17

(a)

5b

10

(b)

10b (70)

5b

10

# FIG. 18

(a)

5b

10

(b)

10c (70)

5b

10

# FIG. 19

(a)

5b

10

(b)

10d (70)

10

# FIG. 20

(a)

5b

10

(b)

10e (70)

10

# FIG. 21

(a)

5b

10

(b)

5b

10f (70)

10

# FIG. 22

(a)

5b

10

(b)

5b

10g (70)

10

# FIG. 23

# FIG. 24

# FIG. 25

# FIG. 26

# FIG. 27

# FIG. 28

# FIG. 29

# FIG. 30

# FIG. 31

# FIG. 32

101a

5

10

# FIG. 33

101a

XXXII

XXXII

5

10

# FIG. 34

# FIG. 35

# FIG. 36

# FIG. 37

# FIG. 38

101d

5

10

# FIG. 39

101d

XXXVIII

XXXVIII

5

10

# FIG. 40

# FIG. 41

# FIG. 42

101f

10

5

# FIG. 43

101f

XLII

XLII

10

5

# FIG. 44

# FIG. 45

# FIG. 46

# FIG. 47

# FIG. 48

**EP 3 150 323 B1**

**REFERENCES CITED IN THE DESCRIPTION**

**Patent documents cited in the description**

- US 6881925 B1
- FR 2900852 A1
- JP 2001004354 B
- EP 1795620A01 A